# EUROPEAN PATENT APPLICATION

(11) **EP 4 266 747 A1**
(43) Date of publication of application: **25.10.2023**
(21) Application number: 21918691.3
(22) Date of filing: 18.01.2021
(51) Int. Cl.: H04W 36/00, H04W 8/18, H04W 8/22

(54) **CAPABILITY COORDINATION METHOD AND APPARATUS FOR TERMINAL DEVICE, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Novagraaf Technologies
(86) International application number: PCT/CN2021/072554
(87) International publication number: WO 2022/151491

(57) **Abstract**

Embodiments of the present application provides a capability coordination method and apparatus for a terminal device, and the terminal device and a network device. The method comprises: a terminal device sends to a first network first communication capability information corresponding to a first communication identity and/or sends to a second network second communication capability information corresponding to a second communication identity, wherein the first communication capability information is used for determining a communication capability of the first communication identity, the communication capability of the first communication identity is determined on the basis of the communication states of the first communication identity and the second communication identity, the second communication capability information is used for determining a communication capability of the second communication identity, and the communication capability of the second communication identity is determined on the basis of the communication states of the first communication identity and the second communication identity.

## Description

### TECHNICAL FIELD

Embodiments of the disclosure relate to the technical field of mobile communications, and in particular, to a method and apparatus for coordinating capability of a terminal device, a terminal device, and a network device.

### BACKGROUND

A terminal device may have two communication identities, in order to achieve scheduling of the two communication identities by a network side, the terminal device may report communication capabilities of the two communication identities to the network side. At present, a manner for the terminal device to report a communication capability is to report a maximum communication capability of the communication identity to the network side. However, for the terminal device having two communication identities, the two communication identities may not have the maximum communication capabilities simultaneously due to hardware implementation complexity of the terminal device. It is necessary to solve the problem of how to coordinate the communication capabilities of the two communication identities.

### SUMMARY

Embodiments of the disclosure provide a method and apparatus for coordinating capability of a terminal device, a terminal device, and a network device.

A method for coordinating capability of a terminal device provided in embodiments of the disclosure includes at least one of the following operations.

The terminal device sends first communication capability information corresponding to a first communication identity to a first network; or the terminal device sends second communication capability information corresponding to a second communication identity to a second network.

The first communication capability information is for determining a communication capability of the first communication identity, and the communication capability of the first communication identity is determined based on a communication state of the first communication identity and a communication state of the second communication identity; and the second communication capability information is for determining a communication capability of the second communication identity, and the communication capability of the second communication identity is determined based on the communication state of the first communication identity and the communication state of the second communication identity.

A method for coordinating capability of a terminal device provided in embodiments of the disclosure includes the following operations.

A first network determines a communication state of a first communication identity and a communication state of a second communication identity. The first communication identity is a communication identity, of the terminal device, corresponding to the first network, and the second communication identity is a communication identity, of the terminal device, corresponding to a second network.

The first network determines a communication capability of the first communication identity based on the communication state of the first communication identity and the communication state of the second communication identity.

Apparatus for coordinating capability of a terminal device provided in embodiments of the disclosure is applied to a terminal device and includes a sending unit.

The sending unit is configured to perform at least one of: sending first communication capability information corresponding to a first communication identity to a first network; or sending second communication capability information corresponding to a second communication identity to a second network.

The first communication capability information is for determining a communication capability of the first communication identity, and the communication capability of the first communication identity is determined based on a communication state of the first communication identity and a communication state of the second communication identity; and the second communication capability information is for determining a communication capability of the second communication identity, and the communication capability of the second communication identity is determined based on the communication state of the first communication identity and the communication state of the second communication identity.

Apparatus for coordinating capability of a terminal device provided in embodiments of the disclosure is applied to a first network and includes a determination unit.

The determination unit is configured to determine a communication state of a first communication identity and a communication state of a second communication identity. The first communication identity is a communication identity, of the terminal device, corresponding to the first network, and the second communication identity is a communication identity, of the terminal device, corresponding to a second network; and determine a communication capability of the first communication identity based on the communication state of the first communication identity and the communication state of the second communication identity.

A terminal device provided in embodiments of the disclosure includes a processor and a memory for storing a computer program. The processor is configured to call and run the computer program stored in the memory to perform the abovementioned method for coordinating capability of the terminal device.

A network device provided in embodiments of the disclosure includes a processor and a memory for storing a computer program. The processor is configured to call and run the computer program stored in the memory to perform the abovementioned method for coordinating capability of the terminal device.

A chip provided in embodiments of the disclosure is configured to perform the abovementioned method for coordinating capability of the terminal device.

Specifically, the chip includes a processor configured to call and run a computer program from a memory, to cause a device mounted with the chip to perform the abovementioned method for coordinating capability of the terminal device.

A computer-readable storage medium provided in embodiments of the disclosure having stored thereon a computer program that enables a computer to perform the abovementioned method for coordinating capability of the terminal device.

A computer program product provided in embodiments of the disclosure includes a computer program instruction that enables a computer to perform the abovementioned method for coordinating capability of the terminal device.

A computer program provided in embodiments of the disclosure, when running on a computer, enables a computer to perform the abovementioned method for coordinating capability of the terminal device.

In the foregoing technical solution, a terminal device has a first communication identity and a second communication identity. Both a communication capability of the first communication identity and a communication capability of the second communication identity are determined based on a communication state of the first communication identity and a communication state of the second communication identity. In such way, the communication capability of the first communication identity and the communication capability of the second communication identity can be adapted to the communication states of the first communication identity and the second communication identity. Therefore, optimal communication performance of two communication identities can achieved without increasing hardware implementation complexity of the terminal device.

### BRIEF DESCRIPTION OF THE DRAWINGS

The accompanying drawings described herein are provided for further understanding of the disclosure and constitute a part of the disclosure. The exemplary embodiments of the disclosure and illustrations thereof are intended to explain the disclosure, but do not constitute inappropriate limitations to the disclosure. In the accompanying drawings:
FIG. 1 is a schematic diagram of an architecture of a communication system according to an embodiment of the disclosure;
FIG. 2 is a schematic diagram of a dual-card terminal device according to an embodiment of the disclosure;
FIG. 3-1 is a schematic diagram of downlink receiving channels of a single-card terminal device according to an embodiment of the disclosure;
FIG. 3-2 is a first schematic diagram of downlink receiving channels of a dual-card terminal device according to an embodiment of the disclosure;
FIG. 3-3 is a second schematic diagram of downlink receiving channels of a dual-card terminal device according to an embodiment of the disclosure;
FIG. 4 is a schematic communication diagram of a dual-card terminal device according to an embodiment of the disclosure;
FIG. 5 is a schematic diagram of downlink receiving channels shared between SIM1 and SIM2 according to an embodiment of the disclosure;
FIG. 6 is a first schematic flowchart of a method for coordinating capability of a terminal device according to an embodiment of the disclosure;
FIG. 7 is a first schematic diagram of communication capability division of SIM1 and SIM2 according to an embodiment of the disclosure;
FIG. 8 is a schematic diagram a communication of network interaction according to an embodiment of the disclosure;
FIG. 9 is a second schematic flowchart of a method for coordinating capability of a terminal device according to an embodiment of the disclosure;
FIG. 10 is a first schematic diagram of a structural composition of apparatus for coordinating capability of a terminal device according to an embodiment of the disclosure;
FIG. 11 is a second schematic diagram of a structural composition of apparatus for coordinating capability of a terminal device according to an embodiment of the disclosure;
FIG. 12 is a schematic structural diagram of a communication device according to an embodiment of the disclosure;
FIG. 13 is a schematic structural diagram of a chip according to an embodiment of the disclosure; and
FIG. 14 is a schematic block diagram of a communication system according to an embodiment of the disclosure.

### DETAILED DESCRIPTION

The technical solution in the embodiments of the disclosure is described below with reference to the accompanying drawings in the embodiments of the disclosure. It is apparent that the described embodiments are merely some rather than all of the embodiments of the disclosure. All other embodiments obtained by a person of ordinary skill in the art based on the embodiments of the disclosure without paying creative efforts shall fall within the protection scope of the disclosure.

The technical solution in the embodiments of the disclosure may be applied to various communication systems, such as a long term evolution (LTE) system, an LTE frequency division duplex (FDD) system, an LTE time division duplex (TDD) system, a 5G communication system, a future communication system, or the like.

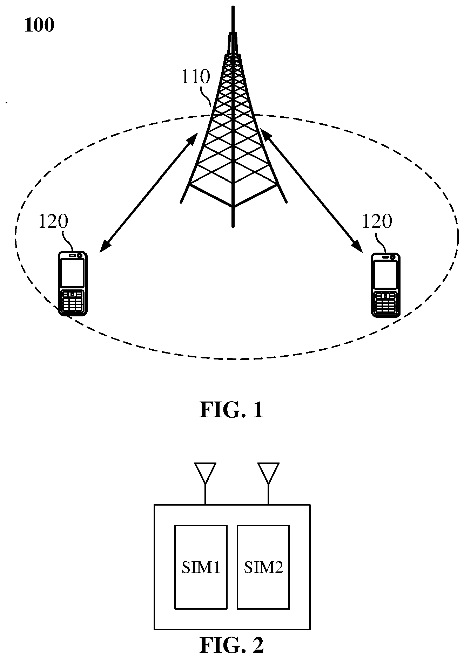

In an example, a communication system 100 to which the embodiments of the disclosure are applied is illustrated in FIG. 1. The communication system 100 may include a network device 110. The network device 110 may be a device that communicates with a terminal 120 (or referred to as a communication terminal or a terminal). The network device 110 may provide communication coverage for a specific geographical area and communicate with terminals located within the coverage. Alternatively, the network device 110 may be an evolved NodeB (eNB or eNodeB) in an LTE system, a radio controller in a cloud radio access network (CRAN), a mobile switching center, a relay station, an access point, a vehicle-mounted device, a wearable device, a hub, a switch, a bridge, a router, a network-side device in a 5G network, a network device in a future communication system, or the like.

The communication system 100 further includes at least one terminal device 120 within the coverage of the network device 110. The "terminal device" used herein includes but not limited to, a device configured to receive/send a communication signal through a wired line connection, for example, a Public Switched Telephone Network (PSTN), a Digital Subscriber Line (DSL), a digital cable and a direct cable connection, and/or another data connection/network, and/or through a wireless interface, for example, a cellular network, a wireless local area network (WLAN), a digital television network like a Digital Video Broadcasting-Handheld (DVB-H) network, a satellite network and an amplitude modulated (AM)-frequency modulated (FM) broadcast transmitter, and/or through another terminal, and/or through an internet of things (IoT) device. The terminal device configured to communicate through a wireless interface may be called a "wireless communication terminal", a "wireless terminal" or a "mobile terminal". Examples of a mobile terminal include but not limited to, a satellite or cellular telephone, a personal communication system (PCS) terminal capable of combining a cellular radio telephone and data processing, faxing and data communication capabilities, a personal digital assistant (PDA) including a radio telephone, a pager, Internet/intranet access, a Web browser, a notepad, a calendar and/or a global positioning system (GPS) receiver, and a conventional laptop and/or palmtop receiver or another electronic device including a radio telephone transceiver. The terminal device may refer to an access terminal, user equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a session initiation protocol (SIP) phone, a wireless local loop (WLL) station, a PDA, a handheld device with a wireless communication function, a computing device, other processing devices connected to a wireless modem, a vehicle device, a wearable device, a terminal device in the 5G network or in the future evolved PLMN or the like.

Alternatively, the terminal devices 120 may perform D2D communication.

Alternatively, the 5G system or the 5G network may also be called a new radio (NR) system or an NR network.

FIG. 1 exemplarily illustrates one network device and two terminals. Alternatively, the communication system 100 may include a plurality of network devices, and each network device may cover another number of terminals, which is not limited in the embodiments of the disclosure.

Alternatively, the communication system 100 may further include other network entities such as a network controller and a mobility management entity, which is not limited in the embodiments of the disclosure.

It should be understood that in the embodiments of the disclosure, devices having a communication function in the networks/systems may be referred to as communication devices. Taking the communication system 100 illustrated in FIG. 1 as an example, the communication devices may include the network device 110 and the terminals 120 having the communication function. The network device 110 and the terminals 120 may be the specific devices as described above, details will not be elaborated herein again. The communication devices may further include other devices in the communication system 100, for example, other network entities such as the network controller and the mobility management entity. This is not limited in the embodiments of the disclosure.

It is to be understood that the terms "system" and "network" in the present disclosure are often used interchangeably herein. The term "and/or" in this disclosure only describes an association relationship for associated objects and represents that three relationships may exist. For example, A and/or B may represent the following three cases: only A exists, both A and B exist, and only B exists. In addition, the character "/" in the present disclosure generally indicates an "or" relationship between the associated objects.

To facilitate understanding of the technical solutions in the embodiments of the disclosure, the technical solution related to the embodiments of the disclosure is described below.

### Multi-card terminal device

A multi-card terminal device is a terminal device having a plurality of communication identities. Herein, a communication identity may be implemented as a physical card or a virtual card. The physical card may be, but is not limited to, a subscriber identity module (SIM) or a universal SIM (USIM). The virtual card may simulate a function of a physical card through virtual software.

For convenience of description, a dual-card terminal device is used as an example for description. The dual-card terminal device is a terminal device having two communication identities. It should be noted that the following description of the dual-card terminal device is also applicable to the multi-card terminal device.

With reference to FIG. 2, FIG. 2 takes an SIM as a communication identity, the terminal device has SIM1 and SIM2. A user may configure the SIM1 and SIM2, for example, the user may configure the SIM1 to answer or call a phone and configure SIM2 to receive or send a data service.

The dual-card terminal device may be classified, based on whether the two communication identities can work simultaneously, as a dual-standby single-active terminal device or a dual-standby dual-active terminal device.

Dual-standby single-active terminal device: the two communication identities may not work simultaneously. In a case, the two communication identities may be simultaneously in standby states. In another case, one of the two communication identities is in the standby state and the other communication identity is in a working state.

Dual-standby dual-active terminal device: the two communication identities may work simultaneously. In a case, the two communication identities may be simultaneously in the standby states. In another case, one of the two communication identities is in the standby state and the other communication identity is in the working state. In still another case, the two communication identities may be simultaneously in the working states.

It should be noted that the standby state corresponds to an idle state or an inactive state. The idle state or the inactive state may also be referred to as a resident state. The working state corresponds to a connected state.

A network in which each of the communication identities of the dual-card terminal device works may be a 2G network, a 3G network, a 4G network, a 5G network, or the like. The user may configure the communication identity to work in any network.

Hardware implementation complexity and cost of the dual-card terminal device are higher than those of a single-card terminal device. In particular, hardware of the dual-standby dual-active terminal device needs to support two communication identities to work simultaneously. In some cases, double hardware resources may be required for the terminal device to support two communication identities to work simultaneously.

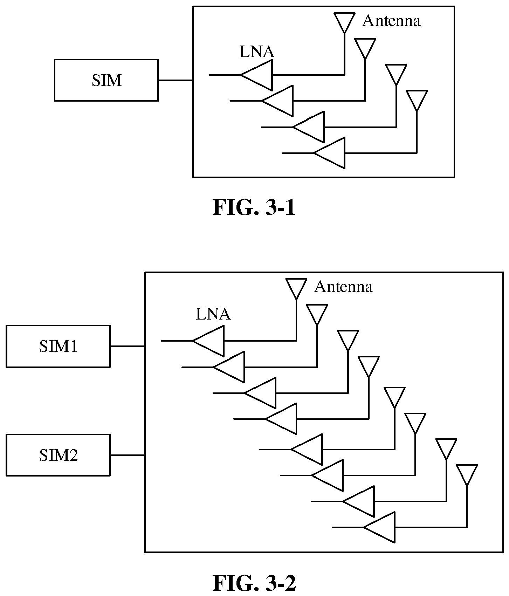

For example, taking an SIM as a communication identity, with reference to FIG. 3-1 and FIG. 3-2, FIG. 3-1 is a schematic diagram of downlink receiving channels of a single-card terminal device. The single-card terminal device has one SIM, the SIM supports 4 downlink receiving channels (which may also be referred to as the SIM supporting 4 streams for short). FIG. 3-2 is a schematic diagram of downlink receiving channels of a dual-card terminal device. The dual-card terminal device has SIM1 and SIM2. SIM1 supports 4 downlink receiving channels (which may also be referred to as SIM1 supporting 4 streams for short). SIM2 supports 4 downlink receiving channels (which may also be referred to as SIM2 supporting 4 streams for short). Each downlink receiving channel includes a low noise amplifier (LNA), an antenna, and the like. Compared to the single-card terminal device using 4 downlink receiving channels, the dual-card terminal device using 8 downlink receiving channels, the complexity and cost are doubled.

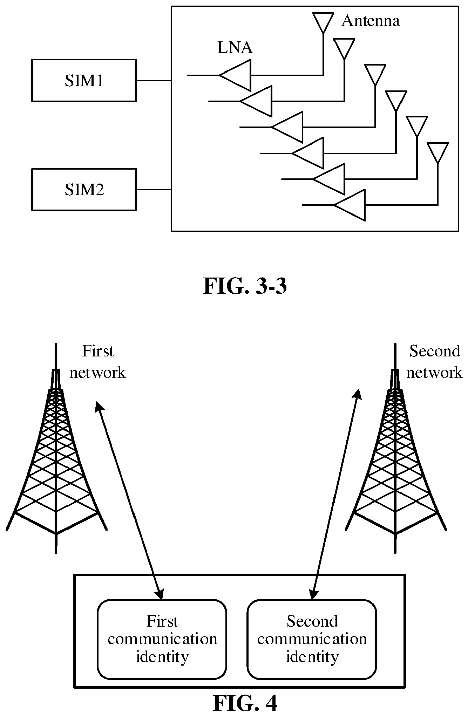

To reduce the hardware implementation complexity and cost, in some cases, the dual-card terminal device may reduce investment of hardware resources by reducing a communication capability of one of the communication identities when a plurality of communication work identities simultaneously, so as to achieve trade-off between communication performance and the complexity and cost. As illustrated in FIG. 3-3, for example, taking also an SIM as a communication identity, SIM1 and SIM2 in a dual-card terminal device share 6 downlink receiving channels, then a communication capability of one SIM supports 4 downlink receiving channels, and a communication capability of the other SIM is appropriately reduced to support 2 downlink receiving channels. In such way, the complexity and cost of the terminal device can be reduced. However, it is raised a problem in this implementation that there is a difference between a communication capability of the terminal device (namely, the communication capability of each of the 2 SIMs) when the two SIMs of the terminal device work simultaneously and a communication capability of the terminal device (namely, the communication capability of each of the 2 SIMs) when one SIM of the terminal device works alone, and a network side may not know the difference. However, since communication capabilities reported by the terminal device to the network side is the communication capability of SIM1 when SIM1 works alone and the communication capability of SIM2 when SIM2 works alone, there is a difference between the communication capability reported by the terminal device to the network side and an actual communication capability of the terminal device, as a result, a problem of scheduling the terminal device by the network side is caused. For example, when the network side schedules the terminal device based on the communication capability of SIM1 when SIM1 works alone and the communication capability of SIM2 when SIM2 works alone reported by the terminal device, the terminal device may not communicate effectively, and overall throughput performance may be reduced. In consideration of the above situation, the following technical solution in the embodiments of the disclosure is proposed.

It should be noted that a "terminal device" in the embodiments of the disclosure may be a mobile phone, a tablet computer, a wearable device, or the like. The terminal device may have a plurality of communication identities, such as two or three communication identities. In the following embodiments, taking the terminal device having two communication identities as an example for description, and the embodiments are not limited thereto. Three or more communication identities may also be applied to the technical solution in the embodiments of the disclosure.

In the embodiments of the disclosure, the terminal device has a first communication identity and a second communication identity. Types of the first communication identity and the second communication identity are not limited in the embodiments of the disclosure. For example, both the first communication identity and the second communication identity are SIMs. For example, both the first communication identity and the second communication identity are USIMs. For example, the first communication identity is an SIM and the second communication identity is a USIM. For example, the first communication identity is a USIM and the second communication identity is an SIM. In addition, network types supported by the first communication identity and the second communication identity are not limited in the embodiments of the disclosure. For example, the first communication identity may support a 2G network, a 3G network, and a 4G network, and the second communication identity may support a 2G network, a 3G network, a 4G network, and a 5G network. The user may select the first communication identity to work in any network the first communication identity supported and the second communication identity to work in any network the second communication identity supported. Furthermore, operators to which the first communication identity and the second communication identity belong are not limited in the embodiments of the disclosure. For example, the first communication identity and the second communication identity may belong to a same operator or different operators.

In the embodiments of the disclosure, with reference to FIG. 4, the network corresponding to the first communication identity is a first network, and the network corresponding to the second communication identity is a second network. The terminal device communicates with the first network through the first communication identity and communicates with the second network through the second communication identity. For example, the terminal device has SIM1 and SIM2, and the terminal device communicates with the first network through SIM1 and communicates with the second network through SIM2. It should be noted that for the network side, different communication identities represent different UE. The network side processes the SIM1 and SIM2 as different UE.

It should be noted that the "communication capability" in the embodiments of the disclosure may be a communication capability for a frequency band or a communication capability for a group of frequency bands.

It should be noted that although some examples in the embodiments of the disclosure are described by taking downlink receiving channels as an example, the technical solution in the embodiments of the disclosure may also be applied to uplink receiving channels.

To facilitate understanding of the technical solution in the embodiments of the disclosure, the technical solution in the disclosure is described in detail below through specific embodiments. The related art described above may be considered as optional solutions and may be arbitrarily combined with the technical solution in the embodiments of the disclosure, and all fall within the protection scope of the embodiments of the disclosure. The embodiments of the disclosure include at least some of the following contents.

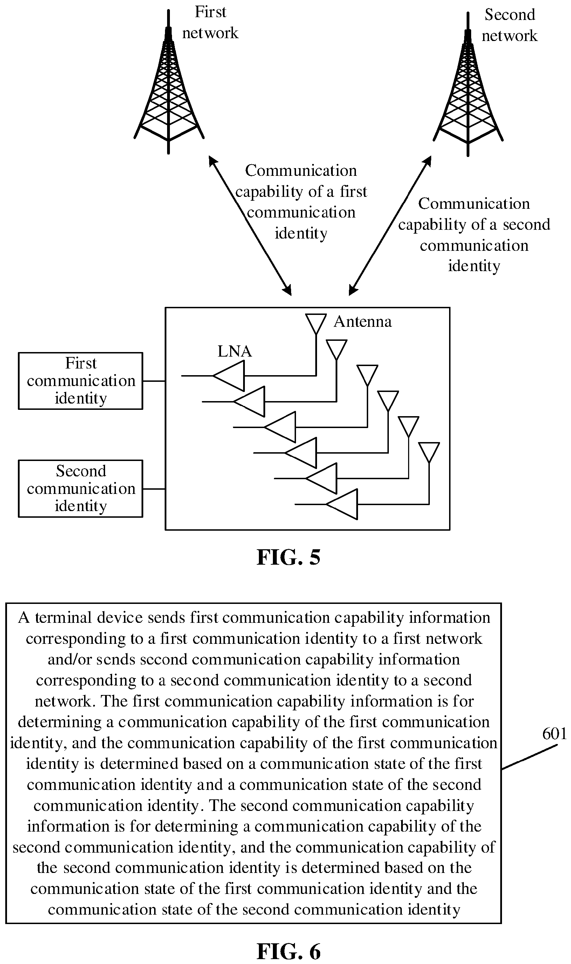

With reference to FIG. 5, for a terminal device using 6 downlink receiving channels, when a first communication identity of the terminal device works alone, a communication capability reported by the terminal device to the first network is 4 streams (that is, the first communication identity supports 4 downlink receiving channels). When a second communication identity of the terminal device works alone, a communication capability reported by the terminal device to the second network is also 4 streams (that is, the second communication identity supports 4 downlink receiving channels). When the first communication identity and the second communication identity work simultaneously, due to limitation of hardware resources, both the communication capability of the first communication identity and the communication capability of the second communication identity may not simultaneously support 4 streams since the terminal device has 6 downlink receiving channels. However, in a present manner, the terminal device reports a maximum communication capability when reporting the communication capability, in other words, the terminal device reports that the communication capability of the first communication identity is 4 streams and the communication capability of the second communication identity is also 4 streams. Therefore, when the first communication identity and the second communication identity work simultaneously, the communication capabilities reported by the terminal device are not communication capabilities when the two communication identities work simultaneously. To avoid that scheduling of the network side exceeds a capability range of the terminal device, a conservative processing way is that the terminal device reports that the communication capability of the first communication identity is 4 streams and the communication capability of the second communication identity is 2 streams when the terminal device initially reports the communication capabilities. However, this static manner of reporting capability information of the terminal device may cause performance of the second communication identity to be limited all the time, even when the first communication identity does not work, the communication capability of the second communication identity is still 2 streams.

Accordingly, this static manner of reporting the capability information of the terminal device may not achieve optimal communication performance. In view of this, the terminal device may determine current communication capabilities of the first communication identity and the second communication identity based on communication states of the first communication identity and the second communication identity, and notify the current communication capabilities of the first communication identity and the second communication identity to the network side.

FIG. 6 is a first schematic flowchart of a method for coordinating capability of a terminal device according to an embodiment of the disclosure. As illustrated in FIG. 6, the method for coordinating capability of a terminal device includes the following operation.

In operation 601, a terminal device sends first communication capability information corresponding to a first communication identity to a first network and/or sends second communication capability information corresponding to a second communication identity to a second network. The first communication capability information is for determining a communication capability of the first communication identity, and the communication capability of the first communication identity is determined based on a communication state of the first communication identity and a communication state of the second communication identity. The second communication capability information is for determining a communication capability of the second communication identity, and the communication capability of the second communication identity is determined based on the communication state of the first communication identity and the communication state of the second communication identity.

In an embodiment of the disclosure, the communication capability may also be referred to as a multiple-input multiple-output (MIMO) capability. For uplink, the communication capability is referred to as an uplink MIMO capability. For downlink, the communication capability is referred to as a downlink MIMO capability.

In an embodiment of the disclosure, the communication capability of the first communication identity is a number of MIMO layers supported by the first communication identity. For uplink, the communication capability of the first communication identity is a number of uplink MIMO layers supported by the first communication identity. For downlink, the communication capability of the first communication identity is a number of downlink MIMO layers supported by the first communication identity.

In this embodiment of the disclosure, the communication capability of the second communication identity is a number of MIMO layers supported by the second communication identity. For uplink, the communication capability of the second communication identity is a number of uplink MIMO layers supported by the second communication identity. For downlink, the communication capability of the second communication identity is a number of downlink MIMO layers supported by the second communication identity.

It should be noted that a total of the communication capability of the first communication identity and the communication capability of the second communication identity is less than or equal to a maximum communication capability supported by the terminal device. The maximum communication capability supported by the terminal device is a maximum number of MIMO layers supported by the terminal device. For uplink, the maximum number of MIMO layers supported by the terminal device is a maximum number of uplink MIMO layers supported by the terminal device. For downlink, the maximum number of MIMO layers supported by the terminal device is a maximum number of downlink MIMO layers supported by the terminal device.

It should be noted that the number of MIMO layers in the above description may also be understood as a number of communication channels. For uplink, the number of uplink MIMO layers may also be understood as a number of uplink communication channels. For downlink, the number of downlink MIMO layers may also be understood as a number of downlink communication channels.

In an embodiment of the disclosure, the communication capability of the first communication identity and the communication capability of the second communication identity are determined based on communication states of the first communication identity and the second communication identity. This is described below.

### Semi-static determining manner

### First manner

The first communication identity has two communication capabilities: a first communication capability and a second communication capability. The second communication identity has one communication capability: a third communication capability.

In some optional embodiments, the terminal device reports the first communication capability and the second communication capability of the first communication identity to the first network. The first communication capability is a communication capability of the first communication identity when both the communication state of the first communication identity and the communication state of the second communication identity are connected states. The second communication capability is a communication capability of the first communication identity when the communication state of the first communication identity is the connected state and the communication state of the second communication identity is a non-connected state.

In some optional embodiments, the terminal device reports the third communication capability of the second communication identity to the second network. The third communication capability is a communication capability of the second communication identity when the communication state of the second communication identity is the connected state and the communication state of the first communication identity is the non-connected state.

It should be noted that the non-connected state in the embodiment of the disclosure may be an idle state, an inactive state, or a non-resident state.

It should be noted that the situation that a communication identity is in the connected state represents that the communication identity is in a working state, and the situation that a communication identity is in the non-connected state represents that the communication identity is not in the working state.

In some optional embodiments, when both the communication state of the first communication identity and the communication state of the second communication identity are the connected states, the first communication capability information indicates that the first communication identity has the first communication capability; alternatively, when the communication state of the first communication identity is the connected state and the communication state of the second communication identity is the non-connected state, the first communication capability information indicates that the first communication identity has the second communication capability. The second communication capability is higher than the first communication capability.

In some optional embodiments, when the communication state of the second communication identity is the connected state, the second communication capability information indicates that the second communication identity has the third communication capability. In a situation, when both the communication state of the first communication identity and the communication state of the second communication identity are the connected states, the second communication capability information indicates that the second communication identity has the third communication capability. Alternatively, in another situation, when the communication state of the second communication identity is the connected state and the communication state of the first communication identity is the non-connected state, the second communication capability information indicates that the second communication identity has the third communication capability.

The technical solution in the embodiment of the disclosure is illustrated below with reference to a specific application example.

### First application example

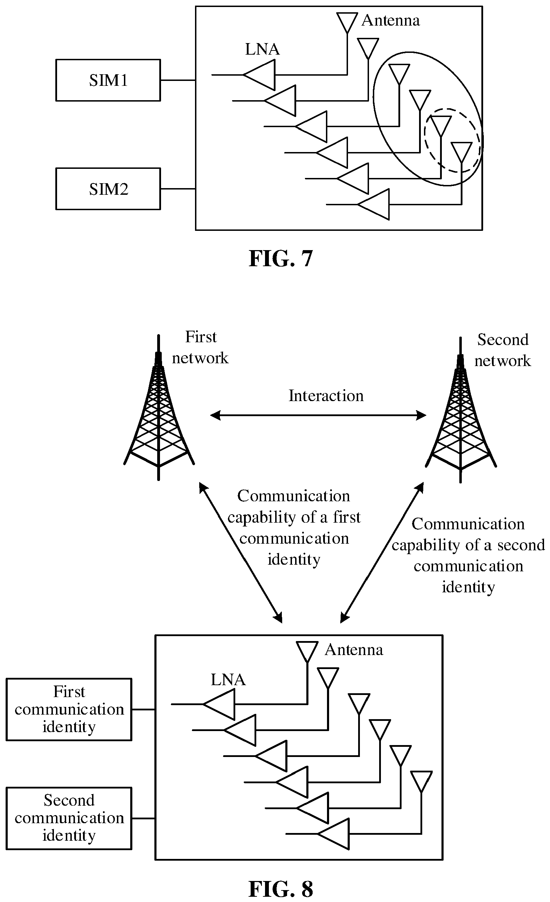

With reference to FIG. 7, the terminal device has SIM1 (corresponding to the second communication identity in the above solution) and SIM2 (corresponding to the first communication identity in the above solution).

A communication capability of the SIM1 is the same as a communication capability when SIM1 works alone. For example, the communication capability of SIM1 is 4 streams.

For SIM2, two communication capabilities of SIM2 are reported as initial capabilities of SIM2. A communication capability 1 (corresponding to the second communication capability in the above solution) is a communication capability of SIM2 when SIM2 works alone. A communication capability 2 (corresponding to the first communication capability in the above solution) is a communication capability of SIM2 when SIM1 and SIM2 simultaneously work. The communication capability 1 is higher than the communication capability 2. For example, the communication capability 1 is 4 streams, and the communication capability 2 is 2 streams. The terminal device indicates a current communication capability of SIM2 by reporting the first communication capability information. For example, the first communication capability information may be implemented by 1-bit indication information. This is specifically described as follows.

In some optional embodiments, when the terminal device detects that SIM2 works alone, the 1-bit indication information explicitly indicates that the current communication capability of SIM2 is 4 streams; and when the terminal device detects that SIM1 and SIM2 work simultaneously, the 1-bit indication information explicitly indicates that the current communication capability of SIM2 is 2 streams, as illustrated in Table 1.

**Table 1**

| Value of 1-bit indication information | Communication capability of SIM2 |
|---|---|
| 1 | 4 streams |
| 0 | 2 streams |

In some optional embodiments, when the terminal device detects that SIM2 works alone, the 1-bit indication information is not reported, to implicitly indicate that the current communication capability of SIM2 is 4 streams; and when the terminal device detects that SIM1 and SIM2 work simultaneously, the 1-bit indication information is reported, and the 1-bit indication information explicitly indicates that the current communication capability of SIM2 is 2 streams, as illustrated in Table 2.

**Table 2**

| | Communication capability of SIM2 |
|---|---|
| Value of the 1-bit indication information being 1 | 2 streams |
| No 1-bit indication information being reported | 4 streams |

### Second manner

The first communication identity has two communication capabilities: a first communication capability and a second communication capability. The second communication identity also has two communication capabilities: a third communication capability and a fourth communication capability.

In some optional embodiments, the terminal device reports the first communication capability and the second communication capability of the first communication identity to the first network. The first communication capability is a communication capability of the first communication identity when both the communication state of the first communication identity and the communication state of the second communication identity are connected states. The second communication capability is a communication capability of the first communication identity when the communication state of the first communication identity is the connected state and the communication state of the second communication identity is a non-connected state.

In some optional embodiments, the terminal device reports the third communication capability and the fourth communication capability of the second communication identity to the second network. The third communication capability is a communication capability of the second communication identity when both the communication state of the first communication identity and the communication state of the second communication identity are the connected states. The fourth communication capability is a communication capability of the second communication identity when the communication state of the second communication identity is the connected state and the communication state of the first communication identity is the non-connected state.

It should be noted that the non-connected state in the embodiment of the disclosure may be an idle state, an inactive state, or a non-resident state.

It should be noted that the situation that a communication identity is in the connected state represents that the communication identity is in a working state, and the situation that a communication identity is in the non-connected state represents that the communication identity is not in the working state.

In some optional embodiments, when both the communication state of the first communication identity and the communication state of the second communication identity are the connected states, the first communication capability information indicates that the first communication identity has the first communication capability; alternatively, when the communication state of the first communication identity is the connected state and the communication state of the second communication identity is the non-connected state, the first communication capability information indicates that the first communication identity has the second communication capability. The second communication capability is higher than the first communication capability.

In some optional embodiments, when both the communication state of the first communication identity and the communication state of the second communication identity are the connected states, the second communication capability information indicates that the second communication identity has the fourth communication capability; alternatively, when the communication state of the second communication identity is the connected state and the communication state of the first communication identity is the non-connected state, the second communication capability information indicates that the second communication identity has the third communication capability. The third communication capability is higher than the fourth communication capability.

The technical solution in the embodiment of the disclosure is illustrated below with reference to a specific application example.

### Second application example

With reference to FIG. 7, the terminal device has SIM1 (corresponding to the second communication identity in the above solution) and SIM2 (corresponding to the first communication identity in the above solution).

For SIM1 and SIM2, two communication capabilities of each of the SIM1 and the SIM2 are reported as initial capabilities of each of the SIM1 and the SIM2. Specifically, two communication capabilities are reported as initial capabilities of SIM1. A communication capability 1 (corresponding to the third communication capability in the above solution) is a communication capability of the SIM1 when the SIM1 works alone. A communication capability 2 (corresponding to the fourth communication capability in the above solution) is a communication capability of the SIM1 when the SIM1 and the SIM2 work simultaneously. The communication capability 1 is higher than the communication capability 2. Two communication capabilities are reported as initial capabilities of the SIM2. A communication capability 1 (corresponding to the second communication capability in the above solution) is a communication capability of the SIM2 when the SIM2 works alone. A communication capability 2 (corresponding to the first communication capability in the above solution) is a communication capability of the SIM2 when the SIM1 and the SIM2 work simultaneously. The communication capability 1 is higher than the communication capability 2. For example, the communication capability 1 is 4 streams, and the communication capability 2 is 2 streams. The terminal device indicates a current communication capability of SIM2 by reporting the first communication capability information and indicates a current communication capability of SIM1 by reporting the second communication capability information. For example, the first communication capability information may be implemented by a piece of 1-bit indication information, and the second communication capability information may be implemented by another piece of 1-bit indication information. The following taking one of the SIM1 and the SIM2 as an example for description.

In some optional embodiments, when the terminal device detects that an SIM works alone, the 1-bit indication information explicitly indicates that the current communication capability of the SIM is 4 streams; and when the terminal device detects that the two SIMs work simultaneously, the 1-bit indication information explicitly indicates that the current communication capability of the SIM is 2 streams, as illustrated in Table 3.

**Table 3**

| Value of the 1-bit indication information | Communication capability of the SIM |
|---|---|
| 1 | 4 streams |
| 0 | 2 streams |

In some optional embodiments, when the terminal device detects that an SIM works alone, the 1-bit indication information is not reported, to implicitly indicate that the current communication capability of the SIM is 4 streams; and when the terminal device detects that the two SIMs work simultaneously, the 1-bit indication information is reported, and the 1-bit indication information explicitly indicates that the current communication capability of the SIM is 2 streams, as illustrated in Table 4.

**Table 4**

| | Communication capability of the SIM |
|---|---|
| Value of the 1-bit indication information being 1 | 2 streams |
| No 1-bit indication information being reported | 4 streams |

According to the foregoing technical solution of the semi-static determining manner in the embodiments of the disclosure, when the communication states of the two communication identities are determined, the terminal device may determine the communication capabilities of the two communication identities and report the communication capabilities to the network side, which is easy to be implemented.

Considering that requirements for communication capabilities for different communication states or different service types may be very different, to better meet communication capabilities actually required by two communication identities, the following associated solution of dynamic determining manner is proposed.

### Dynamic determining manner

### First manner

When the communication state of the first communication identity is different from the communication state of the second communication identity, the communication capability of the first communication identity and the communication capability of the second communication identity are determined based on the communication state of the first communication identity and the communication state of the second communication identity.

In an embodiment of the disclosure, when allocating communication capabilities to two communication cards, the terminal device preferentially allocates a communication capability to a communication identity in a connected state, and secondly allocates the communication capability to a communication identity in a non-connected state. It should be noted that the non-connected state in the embodiment of the disclosure may be an idle state, an inactive state, or a non-resident state.

In some optional embodiments, when the communication state of the first communication identity is the connected state and the communication state of the second communication identity is the non-connected state, the first communication identity is determined to have a second communication capability and the second communication identity is determined to have a fifth communication capability. The fifth communication capability is determined based on the second communication capability and a maximum communication capability supported by the terminal device.

The second communication capability is a communication capability of the first communication identity when the first communication identity works alone. Alternatively, the fifth communication capability may be the maximum communication capability supported by the terminal device minus the second communication capability.

In some optional embodiments, when the communication state of the second communication identity is the connected state and the communication state of the first communication identity is the non-connected state, the second communication identity is determined to have a fourth communication capability and the first communication identity is determined to have a sixth communication capability. The sixth communication capability is determined based on the fourth communication capability and the maximum communication capability supported by the terminal device.

The fourth communication capability is a communication capability of the second communication identity when the second communication identity works alone. Alternatively, the sixth communication capability may be the maximum communication capability supported by the terminal device minus the fourth communication capability.

It should be noted that the situation that a communication identity is in the connected state represents that the communication identity is in a working state, and the situation that a communication identity is in the non-connected state represents that the communication identity is not in the working state.

In an example, the maximum communication capability supported by the terminal device is 6 streams, the terminal device has SIM1 and SIM2, and maximum communication capabilities of the SIM1 and the SIM2 when each of the SIM1 and the SIM2 works alone are both 4 streams. When the SIM1 is in the connected state and the SIM2 is in the non-connected state, a communication capability that the terminal device preferentially allocates to the SIM1 is 4 streams, and a communication capability allocated to the SIM2 is 2 streams.

In an example, the maximum communication capability supported by the terminal device is 6 streams, the terminal device has SIM1 and SIM2, and maximum communication capabilities of the SIM1 and the SIM2 when they work alone respectively are both 4 streams. If SIM2 is in the connected state and SIM1 is in the non-connected state, a communication capability that the terminal device preferentially allocates to the SIM2 is 4 streams, and a communication capability allocated to the SIM1 is 2 streams.

### Second manner

When the communication state of the first communication identity is the same as the communication state of the second communication identity, the communication capability of the first communication identity and the communication capability of the second communication identity are determined based on at least one of: a service type corresponding to the first communication identity; a service type corresponding to the second communication identity; a priority of the first communication identity; or a priority of the second communication identity.

Herein, the situation that the communication state of the first communication identity is the same as the communication state of the second communication identity may be the situation that both the communication state of the first communication identity and the communication state of the second communication identity are connected states, idle states, active states, inactive states, resident states, or the like.

In some optional embodiments, the communication capability of the first communication identity and the communication capability of the second communication identity are determined based on the service type corresponding to the first communication identity and the service type corresponding to the second communication identity.

In some optional embodiments, the communication capability of the first communication identity and the communication capability of the second communication identity are determined based on the priority of the first communication identity and the priority of the second communication identity.

In some optional embodiments, the communication capability of the first communication identity and the communication capability of the second communication identity are determined based on the service type corresponding to the first communication identity, the service type corresponding to the second communication identity, the priority of the first communication identity, and the priority of the second communication identity. Specifically, (1) when the service type corresponding to the first communication identity is the same as the service type corresponding to the second communication identity, the communication capability of the first communication identity and the communication capability of the second communication identity are determined based on the priority of the first communication identity and the priority of the second communication identity; or if the service type corresponding to the first communication identity is different from the service type corresponding to the second communication identity, the communication capability of the first communication identity and the communication capability of the second communication identity are determined based on the service type corresponding to the first communication identity and the service type corresponding to the second communication identity. (2) Alternatively, when the priority of the first communication identity is the same as the priority of the second communication identity, the communication capability of the first communication identity and the communication capability of the second communication identity are determined based on the service type corresponding to the first communication identity and the service type corresponding to the second communication identity; or when the priority of the first communication identity is different from the priority of the second communication identity, the communication capability of the first communication identity and the communication capability of the second communication identity are determined based on the priority of the first communication identity and the priority of the second communication identity.

The operation of how to determine the communication capability of the first communication identity and the communication capability of the second communication identity in the foregoing solution are described in the following description.

The operation that the communication capability of the first communication identity and the communication capability of the second communication identity are determined based on the priority of the first communication identity and the priority of the second communication identity may be implemented by the following manners.

When the priority of the first communication identity is higher than the priority of the second communication identity, the first communication identity is determined to have a second communication capability and the second communication identity is determined to have a fifth communication capability. The fifth communication capability is determined based on the second communication capability and a maximum communication capability supported by the terminal device. Alternatively, when the priority of the second communication identity is higher than the priority of the first communication identity, the second communication identity is determined to have a fourth communication capability and the first communication identity is determined to have a sixth communication capability. The sixth communication capability is determined based on the fourth communication capability and the maximum communication capability supported by the terminal device.

The second communication capability is a communication capability of the first communication identity when the first communication identity works alone. Alternatively, the fifth communication capability may be the maximum communication capability supported by the terminal device minus the second communication capability.

The fourth communication capability is a communication capability of the second communication identity when the second communication identity works alone. Alternatively, the sixth communication capability may be the maximum communication capability supported by the terminal device minus the fourth communication capability.

In some optional embodiments, when allocating communication capabilities to two communication cards, the terminal device preferentially allocates the communication capability to a communication identity with a higher priority, and secondly allocates the communication capability to a communication identity with a lower priority.

In an example, the maximum communication capability supported by the terminal device is 6 streams, the terminal device has SIM1 and SIM2, and maximum communication capabilities of SIM1 and SIM2 when each of the SIM1 and the SIM2 works alone are both 4 streams. When a priority of the SIM1 is higher than a priority of the SIM2, a communication capability that the terminal device preferentially allocates to the SIM1 is 4 streams, and a communication capability allocated to the SIM2 is 2 streams.

In an example, the maximum communication capability supported by the terminal device is 6 streams, the terminal device has SIM1 and SIM2, and maximum communication capabilities of SIM1 and SIM2 when each of the SIM1 and the SIM2 works are both 4 streams. When a priority of the SIM2 is higher than a priority of the SIM1, a communication capability that the terminal device preferentially allocates to the SIM2 is 4 streams, and a communication capability allocated to the SIM1 is 2 streams.

In some optional embodiments, the priorities of the two communication identities of the terminal device may be determined in the following manner: when the first communication identity is a primary card of the terminal device and the second communication identity is a secondary card of the terminal device, the priority of the first communication identity is higher than the priority of the second communication identity; or when the second communication identity is a primary card of the terminal device and the first communication identity is a secondary card of the terminal device, the priority of the second communication identity is higher than the priority of the first communication identity.

In some optional embodiments, when the first communication identity is a primary card of the terminal device and the second communication identity is a secondary card of the terminal device, the priority of the second communication identity is higher than the priority of the first communication identity; or when the second communication identity is a primary card of the terminal device and the first communication identity is a secondary card of the terminal device, the priority of the first communication identity is higher than the priority of the second communication identity.

In the embodiment of the disclosure, the operation that the communication capability of the first communication identity and the communication capability of the second communication identity are determined based on the service type corresponding to the first communication identity and the service type corresponding to the second communication identity may be implemented in the following manner.

When a priority of the service type corresponding to the first communication identity is higher than a priority of the service type corresponding to the second communication identity, the first communication identity is determined to have a second communication capability and the second communication identity is determined to have a fifth communication capability. The fifth communication capability is determined based on the second communication capability and a maximum communication capability supported by the terminal device. Alternatively, when the priority of the service type corresponding to the second communication identity is higher than the priority of the service type corresponding to the first communication identity, the second communication identity is determined to have a fourth communication capability and the first communication identity is determined to have a sixth communication capability. The sixth communication capability is determined based on the fourth communication capability and the maximum communication capability supported by the terminal device.

The second communication capability is a communication capability of the first communication identity when the first communication identity works alone. Alternatively, the fifth communication capability may be the maximum communication capability supported by the terminal device minus the second communication capability.

The fourth communication capability is a communication capability of the second communication identity when the second communication identity works alone. Alternatively, the sixth communication capability may be the maximum communication capability supported by the terminal device minus the fourth communication capability.

In the embodiment of the disclosure, when allocating communication capabilities to two communication cards, the terminal device preferentially allocates the communication capability to a communication identity of a service type with a higher priority, and secondly allocates the communication capability to a communication identity of a service type with a lower priority.

In an example, the maximum communication capability supported by the terminal device is 6 streams, the terminal device has SIM1 and SIM2, and maximum communication capabilities of SIM1 and SIM2 when each of the SIM1 and the SIM2 works alone are both 4 streams. The SIM1 corresponds to a data service, and the SIM2 corresponds to a voice service. When a priority of the data service is higher than a priority of the voice service, a communication capability that the terminal device preferentially allocates to the SIM1 is 4 streams, and a communication capability allocated to the SIM2 is 2 streams. When the priority of the voice service is higher than the priority of the data service, a communication capability that the terminal device preferentially allocates to the SIM2 is 4 streams, and a communication capability allocated to the SIM1 is 2 streams.

In an example, the maximum communication capability supported by the terminal device is 6 streams, the terminal device has SIM1 and SIM2, and maximum communication capabilities of SIM1 and SIM2 when each of the SIM1 and the SIM2 works alone are both 4 streams. The SIM1 corresponds to a voice service, and the SIM2 corresponds to a data service. When a priority of the data service is higher than a priority of the voice service, a communication capability that the terminal device preferentially allocates to the SIM2 is 4 streams, and a communication capability allocated to the SIM1 is 2 streams. When the priority of the voice service is higher than the priority of the data service, a communication capability that the terminal device preferentially allocates to the SIM1 is 4 streams, and a communication capability allocated to the SIM2 is 2 streams.

In the foregoing technical solution of the dynamic determining manner in the embodiments of the disclosure, the terminal device flexibly determines the communication capabilities of the two communication identities based on at least one of the communication states of the two communication identities, the service types respectively corresponding to the two communication identities, or the priorities of the two communication identities, to better meet actual requirements of the two communication identities.

With reference to FIG. 8, for a terminal device using 6 downlink receiving channels, when a first communication identity of the terminal device works alone, a communication capability reported by the terminal device to a first network is 4 streams (that is, the first communication identity supports 4 downlink receiving channels). When a second communication identity of the terminal device works alone, a communication capability reported by the terminal device to the second network is also 4 streams (that is, the second communication identity supports 4 downlink receiving channels). When the first communication identity and the second communication identity work simultaneously, due to limitation of hardware resources, both the communication capability of the first communication identity and the communication capability of the second communication identity may not simultaneously support 4 streams since the terminal device has 6 downlink receiving channels. However, in a present manner, the terminal device reports a maximum communication capability when reporting the communication capability, in other words, the terminal device reports that the communication capability of the first communication identity is 4 streams and the communication capability of the second communication identity is also 4 streams. Therefore, when the first communication identity and the second communication identity work simultaneously, the communication capabilities reported by the terminal device are not communication capabilities when the two communication identities work simultaneously. To avoid that scheduling of the network side exceeds a capability range of the terminal device, a conservative processing way is that the terminal device reports that the communication capability of the first communication identity is 4 streams and the communication capability of the second communication identity is 2 streams when the terminal device initially reports the communication capabilities. However, this static manner of reporting capability information of the terminal device may cause performance of the second communication identity to be limited all the time, even when the first communication identity does not work, the communication capability of the second communication identity is still 2 streams.

Accordingly, this static manner of reporting the capability information of the terminal device may not achieve optimal communication performance. In view of this, the current communication capabilities of the first communication identity and the second communication identity may be determined through interaction between the first network and the second network.

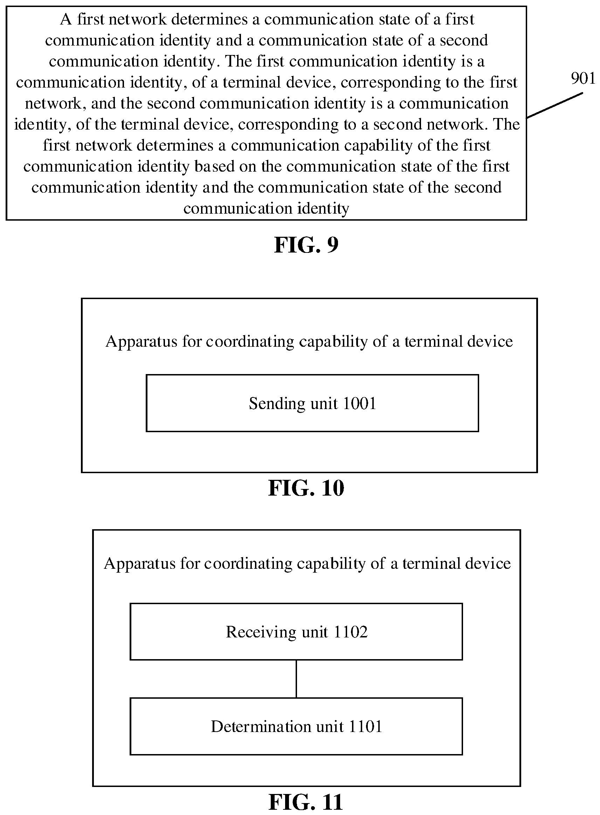

FIG. 9 is a second schematic flowchart of a method for coordinating capability of a terminal device according to an embodiment of the disclosure. As illustrated in FIG. 9, the method for coordinating capability of a terminal device includes the following operations.

In operation 901, a first network determines a communication state of a first communication identity and a communication state of a second communication identity. The first communication identity is a communication identity, of a terminal device, corresponding to the first network, and the second communication identity is a communication identity, of the terminal device, corresponding to a second network. The first network determines a communication capability of the first communication identity based on the communication state of the first communication identity and the communication state of the second communication identity.

In an embodiment of the disclosure, the communication capability may also be referred to as a MIMO capability. For uplink, the communication capability is referred to as an uplink MIMO capability. For downlink, the communication capability is referred to as a downlink MIMO capability.

In an embodiment of the disclosure, the communication capability of the first communication identity is a number of MIMO layers supported by the first communication identity. For uplink, the communication capability of the first communication identity is a number of uplink MIMO layers supported by the first communication identity. For downlink, the communication capability of the first communication identity is a number of downlink MIMO layers supported by the first communication identity.

In this embodiment of the disclosure, the communication capability of the second communication identity is a number of MIMO layers supported by the second communication identity. For uplink, the communication capability of the second communication identity is a number of uplink MIMO layers supported by the second communication identity. For downlink, the communication capability of the second communication identity is a number of downlink MIMO layers supported by the second communication identity.

It should be noted that a total of the communication capability of the first communication identity and the communication capability of the second communication identity is less than or equal to a maximum communication capability supported by the terminal device. The maximum communication capability supported by the terminal device is a maximum number of MIMO layers supported by the terminal device. For uplink, the maximum number of MIMO layers supported by the terminal device is a maximum number of uplink MIMO layers supported by the terminal device. For downlink, the maximum number of MIMO layers supported by the terminal device is a maximum number of downlink MIMO layers supported by the terminal device.

It should be noted that the number of MIMO layers in the above description may also be understood as a number of communication channels. For uplink, the number of uplink MIMO layers may also be understood as a number of uplink communication channels. For downlink, the number of downlink MIMO layers may also be understood as a number of downlink communication channels.

In the embodiment of the disclosure, the first network determines the communication state of the first communication identity and the communication state of the second communication identity, and determines the communication capability of the first communication identity based on the communication state of the first communication identity and the communication state of the second communication identity. Similarly, the second network determines the communication state of the first communication identity and the communication state of the second communication identity, and determines the communication capability of the second communication identity based on the communication state of the first communication identity and the communication state of the second communication identity.

It should be noted that although the technical solution in this embodiment of the disclosure is described through a manner in which the first network determines the communication capability of the first communication identity, it should be understood that a manner in which the second network determines the communication capability of the second communication identity may be referred to the manner in which the first network determines the communication capability of the first communication identity. The manner in which the first network determines the communication capability of the first communication identity is described as following.

### First situation

The first communication identity has two communication capabilities: a first communication capability and a second communication capability.

In some optional embodiments, the terminal device reports the first communication capability and the second communication capability of the first communication identity to the first network, and the first network receives the first communication capability and the second communication capability of the first communication identity reported by the terminal device. The first communication capability is a communication capability of the first communication identity when both the communication state of the first communication identity and the communication state of the second communication identity are connected states. The second communication capability is a communication capability of the first communication identity when the communication state of the first communication identity is the connected state and the communication state of the second communication identity is a non-connected state.

In an embodiment of the disclosure, the first network determines the communication state of the first communication identity and the communication state of the second communication identity, and determines the communication capability of the first communication identity based on the communication state of the first communication identity and the communication state of the second communication identity.

Since a network accessed by the first communication identity is the first network, the first network knows the communication state of the first communication identity. Since a network accessed by the second communication identity is the second network, the second network knows the communication state of the second communication identity. The first network obtains the communication state of the second communication identity by interacting with the second network.

The first network may obtain the communication state of the second communication identity through one of the following manners.

First manner: the first network receives first indication information from the second network, and determines the communication state of the second communication identity based on the first indication information. The first indication information indicates whether the second communication identity is in the connected state or the non-connected state.

Second manner: when the first network receives first indication information from the second network, the first network determines that the communication state of the second communication identity is the connected state based on the first indication information; or when the first network receives no first indication information from the second network, the first network determines that the communication state of the second communication identity is the non-connected state. The first indication information indicates that the second communication identity is in the connected state.

In some optional embodiments, when both the communication state of the first communication identity and the communication state of the second communication identity are the connected states, the first network determines that the first communication identity has the first communication capability; or when the communication state of the first communication identity is the connected state and the communication state of the second communication identity is the non-connected state, the first network determines that the first communication identity has the second communication capability. The second communication capability is higher than the first communication capability.

It should be noted that the non-connected state in the embodiment of the disclosure may be an idle state, an inactive state, or a non-resident state.

In the embodiment of the disclosure, since the second network also needs to determine the communication capability of the second communication identity, the second network interacts with the first network to obtain the communication state of the first communication identity. In view of this, the first network sends second indication information to the second network. The second indication information indicates the communication state of the first communication identity. The second indication information is used to determine, by the second network, the communication capability of the second communication identity based on the communication state of the first communication identity and the communication state of the second communication identity. It should be noted that a manner in which the second network obtains the communication state of the first communication identity may be referred to the manner in which the first network obtains the communication state of the second communication identity. In addition, a manner in which the second network determines the communication capability of the second communication identity may be referred to the manner in which the first network determines the communication capability of the first communication identity.

It should be noted that the situation that a communication identity is in the connected state represents that the communication identity is in a working state, and the situation that a communication identity is in the non-connected state represents that the communication identity is not in the working state.

The solution related to the first situation may be applicable to the following scenarios.

First scenario: a first communication card and a second communication card are not prioritized.

Second scenario: the first communication card and the second communication card are prioritized, and a priority of the first communication identity is the same as a priority of the second communication identity.

Third scenario: the first communication card and the second communication card are prioritized, and the priority of the first communication identity is lower than the priority of the second communication identity.

In an example, the maximum communication capability supported by the terminal device is 6 streams, and the terminal device has SIM1 and SIM2. For SIM1 and SIM2, two communication capabilities of each of the SIM1 and the SIM2 are reported as initial capabilities of each of the SIM1 and the SIM2. Specifically, two communication capabilities are reported as initial capabilities of the SIM1. A communication capability 1 is a communication capability of the SIM1 when the SIM1 works alone. A communication capability 2 is a communication capability of the SIM1 when the SIM1 and the SIM2 work simultaneously. The communication capability 1 is higher than the communication capability 2. For example, the communication capability 1 is 4 streams, and the communication capability 2 is 3 streams. Two communication capabilities are reported as initial capabilities of the SIM2. A communication capability 3 is a communication capability of the SIM2 when the SIM2 works alone. A communication capability 4 is a communication capability of SIM2 when the SIM1 and the SIM2 work simultaneously. The communication capability 3 is higher than the communication capability 4. For example, the communication capability 3 is 4 streams, and the communication capability 4 is 3 streams. Communication states of the SIM1 and the SIM2 are interacted between the first network and the second network to further determine communication capabilities of SIM1 and SIM2. The operation is specifically described as follows.

When detecting that the SIM1 is in the connected state, the first network informs the second network that the SIM1 is in the connected state. Similarly, when detecting that SIM2 is in the connected state, the second network informs the first network that SIM2 is in the connected state. When the first network determines that both SIM1 and SIM2 are in the connected states, and the first network may determine that the communication capability of the SIM1 is the communication capability 2, for example, the communication capability 2 is 3 streams. Similarly, when the second network determines that both the SIM1 and the SIM2 are in the connected states, and the second network may determine that the communication capability of the SIM2 is the communication capability 4. For example, the communication capability 4 is 3 streams.

When detecting that the SIM1 is in the connected state, the first network informs the second network that SIM1 is in the connected state. When detecting that the SIM2 is in the non-connected state, the second network may determine to inform the first network that the SIM2 is in the non-connected state or not to inform the first network of the communication state of the SIM2. That is, when the first network receives no indication information indicating the communication state of SIM2 from the second network, the first network defaults that the SIM2 is in the non-connected state. The first network determines that the SIM1 is in the connected state and the SIM2 is in the non-connected state, and accordingly may determine that the communication capability of the SIM1 is the communication capability 1, for example, the communication capability 1 is 4 streams.

### Second situation

The first communication identity has two communication capabilities: a first communication capability and a second communication capability.

In some optional embodiments, the terminal device reports, to the first network, a maximum number of MIMO layers supported by the terminal device and a number of MIMO layers supported by the first communication identity when the first communication identity works alone. The first network receives the maximum number of MIMO layers supported by the terminal device and the number of MIMO layers supported by the first communication identity when the first communication identity works alone that are reported by the terminal device.

In an embodiment of the disclosure, the first network determines a number of MIMO layers occupied by the second communication identity, and determines a number of MIMO layers supported by the first communication identity based on the number of MIMO layers occupied by the second communication identity and the maximum number of MIMO layers supported by the terminal device.

Since a network accessed by the first communication identity is the first network and a network accessed by the second communication identity is the second network, the first network may interact with the second network to obtain the number of MIMO layers occupied by the second communication identity.

The first network may obtain the number of MIMO layers occupied by the second communication identity through any one of the following manners.

First manner: the first network receives first indication information from the second network, and determines the number of MIMO layers occupied by the second communication identity based on the first indication information. The first indication information indicates the number of MIMO layers occupied by the second communication identity.

Second manner: when the first network receives first indication information from the second network, the first network determines the number of MIMO layers occupied by the second communication identity based on the first indication information; or when the first network receives no first indication information from the second network, the first network determines that the second communication identity is in a non-connected state, that is, the second communication identity does not occupy an MIMO layer. The first indication information indicates the number of MIMO layers occupied by the second communication identity.

In some optional embodiments, when the communication state of the second communication identity is the connected state and the number of MIMO layers occupied by the second communication identity is m, the first network determines that the number of MIMO layers supported by the first communication identity is L-m, where L is the maximum number of MIMO layers supported by the terminal device, and m is a positive integer greater than or equal to 1 and less than or equal to L; or when the communication state of the second communication identity is the non-connected state (that is, the second communication identity does not occupy the MIMO layer), the first network determines that the number of MIMO layers supported by the first communication identity is S, where S is the number of MIMO layers supported by the first communication identity when the first communication identity works alone, S is a positive integer greater than or equal to 1 and less than or equal to L, and L is the maximum quantity of MIMO layers supported by the terminal device.

It should be noted that the non-connected state in this embodiment of the disclosure may be an idle state, an inactive state, or a non-resident state.

It should be noted that the situation that a communication identity is in the connected state represent that the communication identity is in a working state. The situation that a communication identity is in the non-connected state represent that the communication identity is not in the working state.

The solution related to First situation may be applicable to the following scenarios.

First scenario: a first communication card and a second communication card are not prioritized.

Second scenario: the first communication card and the second communication card are prioritized, and a priority of the first communication identity is the same as a priority of the second communication identity.

Third scenario: the first communication card and the second communication card are prioritized, and the priority of the first communication identity is lower than the priority of the second communication identity.

In an example, the terminal device has SIM1 and SIM2. For the SIM1, as initial capabilities of SIM1, a number of MIMO layers supported by SIM1 when SIM1 works alone being S and the maximum number of MIMO layers supported by the terminal device being L are reported for the SIM1. The first network interacts with the second network to obtain that a number of MIMO layers occupied by the SIM2 is m, and then the first network determines that the number of MIMO layers supported by SIM1 is L-m.

### Third situation

The first communication identity has one communication capability: a second communication capability.

In some optional embodiments, the terminal device reports the second communication capability of the first communication identity to the first network, and the first network receives the second communication capability of the first communication identity reported by the terminal device. The second communication capability is a communication capability of the first communication identity when the communication state of the first communication identity is a connected state and the communication state of the second communication identity is a non-connected state.

In an embodiment of the disclosure, the first network determines the communication state of the first communication identity and the communication state of the second communication identity, and determines the communication capability of the first communication identity based on the communication state of the first communication identity and the communication state of the second communication identity. Alternatively, the first network determines the communication capability of the first communication identity only based on the communication state of the first communication identity and does not determine the communication state of the second communication identity.

When the communication state of the first communication identity is the connected state, the first network determines that the first communication identity has the second communication capability.

In some optional embodiments, when both the communication state of the first communication identity and the communication state of the second communication identity are the connected states, the first network determines that the first communication identity has the second communication capability; or when the communication state of the first communication identity is the connected state and the communication state of the second communication identity is the non-connected state, the first network determines that the first communication identity has the second communication capability.

It should be noted that the non-connected state in this embodiment of the disclosure may be an idle state, an inactive state, or a non-resident state.

It should be noted that the situation that a communication identity is in the connected state represents that the communication identity is in a working state. The situation that a communication identity is in the non-connected state represents that the communication identity is not in the working state.

The solution related to the First situation may be applicable to the following scenario.

Fourth scenario: a priority of the first communication identity is higher than a priority of the second communication identity.

The technical solution in the embodiment of the disclosure is illustrated below with reference to a specific application example.

### Third application example

The terminal device has SIM1 and SIM2. The SIM1 and the SIM2 are not prioritized or the SIM1 and the SIM2 have a same priority.

Two communication capabilities are reported as initial capabilities of each of the SIM1 and the SIM2. Specifically, two communication capabilities are reported as initial capabilities of the SIM1. A communication capability 1 is a communication capability of the SIM1 when the SIM1 works alone. A communication capability 2 is a communication capability of the SIM1 when the SIM1 and the SIM2 work simultaneously. For example, the communication capability 1 is 4 streams, and the communication capability 2 is 3 streams. Two communication capabilities are reported as initial capabilities of the SIM2. A communication capability 3 is a communication capability of the SIM2 when the SIM2 works alone. A communication capability 4 is a communication capability of the SIM2 when the SIM1 and the SIM2 work simultaneously. For example, the communication capability 3 is 4 streams, and the communication capability 4 is 3 streams. Communication states of the SIM1 and the SIM2 are interacted between the first network and the second network for the networks to further determine communication capabilities of the SIM1 and the SIM2. The operation is specifically described as follows.

When detecting that the SIM1 is in the connected state, the first network informs the second network that the SIM1 is in the connected state. Similarly, when detecting that the SIM2 is in the connected state, the second network informs the first network that the SIM2 is in the connected state. The first network determines that both the SIM1 and the SIM2 are in the connected states, and the first network may determine that the communication capability of the SIM1 is the communication capability 2. For example, the communication capability 2 is 3 streams. Similarly, the second network determines that both the SIM1 and the SIM2 are in the connected states, and the second network may determine that the communication capability of the SIM2 is the communication capability 4. For example, the communication capability 4 is 3 streams.

When detecting that the SIM1 is in the connected state, the first network informs the second network that SIM1 is in the connected state. When detecting that SIM2 is in the non-connected state, the second network may determine to inform the first network that the SIM2 is in the non-connected state or not to inform the first network of the communication state of the SIM2. That is, when the first network receives no indication information indicating the communication state of SIM2 from the second network, the first network defaults that the SIM2 is in the non-connected state. The first network determines that the SIM1 is in the connected state and SIM2 is in the non-connected state, and accordingly may determine that the communication capability of the SIM1 is the communication capability 1. For example, the communication capability 1 is 4 streams.

### Fourth application example

The terminal device has SIM1 and SIM2. SIM1 and SIM2 are prioritized, and priorities of the SIM1 and the SIM2 are different. In some optional embodiments, the priority of the SIM1 is higher than the priority of the SIM2. In some optional embodiments, the priority of the SIM2 is higher than the priority of the SIM1. For convenience of description, a network corresponding to a high-priority SIM is referred to as a high-priority network, and a network corresponding to a low-priority SIM is referred to as a low-priority network.

One communication capability, namely, a communication capability of the high-priority SIM when the high-priority SIM works alone, is reported as an initial capability of the high-priority SIM. The communication capability of the high-priority SIM does not change with a communication capability of another SIM.

Two communication capabilities are reported as initial capabilities of the low-priority SIM. A communication capability 1 is a communication capability of the low-priority SIM when the low-priority SIM works alone. A communication capability 2 is a communication capability of the low-priority SIM when the high-priority SIM and the low-priority SIM work simultaneously. For example, the communication capability 1 is 4 streams, and the communication capability 2 is 3 streams. Communication states of the SIMs are interacted between the high-priority network and the low-priority network to further determine a communication capability of the low-priority SIM. The operation is described specifically as follows.

When detecting that the high-priority SIM is in the connected state, the high-priority network informs the low-priority network that the high-priority SIM is in the connected state. The low-priority network may determine that the communication capability of the low-priority SIM is the communication capability 2. For example, the communication capability 2 is 3 streams.

When detecting that the high-priority SIM is in the non-connected state, the high-priority network may determine to inform the low-priority network that the high-priority SIM is in the non-connected state or not to inform the low-priority network that the high-priority SIM is in the non-connected state. That is, when the low-priority network receives no indication information indicating the communication state of the high-priority SIM from the high-priority network, the low-priority network defaults that the high-priority SIM is in the non-connected state. The low-priority network may determine that the communication capability of the low-priority SIM is the communication capability 1. For example, the communication capability 1 is 4 streams.

### Fifth application example

The terminal device has SIM1 and SIM2. The first network knows the maximum number of MIMO layers supported by the terminal device being L (a total number of MIMO layers of the terminal device being L when the SIM1 and the SIM2 work simultaneously) and a number of MIMO layers occupied by the SIM2, such that the first network can know a number of MIMO layers supported by SIM1 (namely, a maximum number of MIMO layers that SIM1 can use). Similarly, the second network knows the maximum number of MIMO layers supported by the terminal device being L (the total number of MIMO layers of the terminal device being L when the SIM1 and the SIM2 work simultaneously) and a number of MIMO layers occupied by the SIM1, such that the first network may know a number of MIMO layers supported by the SIM2 (namely, a maximum number of MIMO layers that the SIM2 can use).

When the SIM1 and the SIM2 are prioritized, and priorities of the SIM1 and the SIM2 are different. In some optional embodiments, the priority of the SIM1 is higher than the priority of the SIM2. In some optional embodiments, the priority of the SIM2 is higher than the priority of the SIM1. For convenience of description, a network corresponding to a high-priority SIM is referred to as a high-priority network, and a network corresponding to a low-priority SIM is referred to as a low-priority network. Interaction between the high-priority network and the low-priority network may be only notification from the high-priority network to the low-priority network.

When the SIM1 and the SIM2 are not prioritized, or the SIM1 and the SIM2 have a same priority. In interaction between the networks, MIMO layers may be allocated in a "first-come first-served" manner. That is, the total number of MIMO layers is preferentially used by a SIM that has started a service, and the remaining number of MIMO layers is used by a SIM that starts a service later.

When the SIM1 initially accesses the first network, the SIM1 reports the number of MIMO layers supported by the SIM1 when the SIM1 works alone being S 1 and the maximum number of MIMO layers supported by the terminal device being L (that is, the total number of MIMO layers of the terminal device being L when SIM1 and SIM2 work simultaneously).

When the SIM2 initially accesses the second network, the SIM2 reports the number of MIMO layers supported by the SIM2 when the SIM2 works alone being S2 and the maximum number of MIMO layers supported by the terminal device being L (that is, the total number of MIMO layers of the terminal device being L when SIM1 and SIM2 work simultaneously).

A number of MIMO layers occupied by one SIM is interacted between the networks for the networks to further determine a number of MIMO layers supported by the other SIM. The operation is described specifically as follows.

When the SIM1 and the SIM2 are prioritized, and priorities of SIM1 and SIM2 are different. 1) When detecting that a number of MIMO layers occupied by the high-priority SIM is m (1 < m < L), the high-priority network informs the low-priority network of m. The low-priority network provides the remaining number of MIMO layers (L-m) for the low-priority SIM to use. 2) When detecting that the high-priority SIM is in the non-connected state, the high-priority network may determine to inform the low-priority network that the high-priority SIM does not occupy an MIMO layer or not to inform (in this case, the high-priority SIM does not occupy an MIMO layer by default) the low-priority network that the high-priority SIM does not occupy an MIMO layer. The low-priority network uses the number of MIMO layers when the low-priority SIM works alone.

When the SIM1 and the SIM2 are not prioritized, or the SIM1 and the SIM2 have a same priority. 1) When detecting that the number of MIMO layers occupied by the SIM1 is m (1 ≤ m ≤ L), the first network informs the second network of m. The second network provides the remaining number of MIMO layers (L-m) for the SIM2 to use. 2) When detecting that the number of MIMO layers occupied by the SIM2 is m (1 ≤ m ≤ L), the second network informs the first network of m. The first network provides the remaining number of MIMO layers (L-m) for the SIM1 to use.

According to the technical solution in the embodiment of the disclosure, implementation complexity of the terminal device can be reduced through the interaction between the networks. In addition, the communication capabilities corresponding to the first communication identity and the second communication identity respectively can be determined based on the communication states of the first communication identity and the second communication identity of the terminal device, to further efficiently achieve allocation of the communication capabilities.

According to the technical solution in the embodiment of the disclosure, the two communication identities of the terminal device can share the communication capability of the terminal device. The communication capability division can be performed based on the communication capability information reported by the terminal device or the communication states of the communication identities interacted between the networks, such that the communication capability of each communication identity can match the communication state of the communication identity in the terminal device.

FIG. 10 is a first schematic diagram of a structural composition of apparatus for coordinating capability of a terminal device according to an embodiment of the disclosure. The apparatus is applied to a terminal device. As illustrated in FIG. 10, the apparatus for coordinating capability of a terminal device includes a sending unit 1001.

The sending unit 1001 is configured to perform at least one of: sending first communication capability information corresponding to a first communication identity to a first network; or sending second communication capability information corresponding to a second communication identity to a second network.

The first communication capability information is for determining a communication capability of the first communication identity, and the communication capability of the first communication identity is determined based on a communication state of the first communication identity and a communication state of the second communication identity; and the second communication capability information is for determining a communication capability of the second communication identity, and the communication capability of the second communication identity is determined based on the communication state of the first communication identity and the communication state of the second communication identity.

In some optional embodiments, when both the communication state of the first communication identity and the communication state of the second communication identity are connected states, the first communication capability information indicates that the first communication identity has a first communication capability.

In other optional embodiment, when the communication state of the first communication identity is a connected state and the communication state of the second communication identity is a non-connected state, the first communication capability information indicates that the first communication identity has a second communication capability.

In some optional embodiments, the sending unit 1001 is further configured to report the first communication capability and the second communication capability of the first communication identity to the first network.

In some optional embodiments, the first communication capability is a communication capability of the first communication identity when both the communication state of the first communication identity and the communication state of the second communication identity are the connected states. The second communication capability is a communication capability of the first communication identity when the communication state of the first communication identity is the connected state and the communication state of the second communication identity is the non-connected state.

In some optional embodiments, the second communication capability information indicates that the second communication identity has a third communication capability when the communication state of the second communication identity is the connected state.

In some optional embodiments, the second communication capability information indicates that the second communication identity has a third communication capability when both the communication state of the first communication identity and the communication state of the second communication identity are connected states.

In other optional embodiments, the second communication capability information indicates that the second communication identity has a third communication capability when the communication state of the second communication identity is a connected state and the communication state of the first communication identity is a non-connected state

In some optional embodiments, the second communication capability information indicates that the second communication identity has a fourth communication capability when both the communication state of the first communication identity and the communication state of the second communication identity are connected states.

In other optional embodiments, the second communication capability information indicates that the second communication identity has a third communication capability when the communication state of the second communication identity is a connected state and the communication state of the first communication identity is a non-connected state.

In some optional embodiments, the sending unit 1001 is further configured to report the third communication capability and the fourth communication capability of the second communication identity to the second network.

In some optional embodiments, the third communication capability is a communication capability of the second communication identity when both the communication state of the first communication identity and the communication state of the second communication identity are the connected states. The fourth communication capability is a communication capability of the second communication identity when the communication state of the second communication identity is the connected state and the communication state of the first communication identity is the non-connected state.

In some optional embodiments, in response to the communication state of the first communication identity being different from the communication state of the second communication identity, the communication capability of the first communication identity and the communication capability of the second communication identity are determined based on the communication state of the first communication identity and the communication state of the second communication identity.

In some optional embodiments, the operation that in response to the communication state of the first communication identity being different from the communication state of the second communication identity, the communication capability of the first communication identity and the communication capability of the second communication identity are determined based on the communication state of the first communication identity and the communication state of the second communication identity comprises includes the following operation.

In response to the communication state of the first communication identity being a connected state and the communication state of the second communication identity being a non-connected state, it is determined that the first communication identity has a second communication capability and the second communication identity has a fifth communication capability. The fifth communication capability is determined based on the second communication capability and a maximum communication capability supported by the terminal device.

Alternatively, in response to the communication state of the second communication identity being a connected state and the communication state of the first communication identity being a non-connected state, it is determined that the second communication identity has a fourth communication capability and the first communication identity has a sixth communication capability. The sixth communication capability is determined based on the fourth communication capability and a maximum communication capability supported by the terminal device.

In some optional embodiments, in response to the communication state of the first communication identity being the same as the communication state of the second communication identity, the communication capability of the first communication identity and the communication capability of the second communication identity are determined based on at least one of: a service type corresponding to the first communication identity; a service type corresponding to the second communication identity; a priority of the first communication identity; or a priority of the second communication identity.

In some optional embodiments, the operation that the communication capability of the first communication identity and the communication capability of the second communication identity are determined based on the priority of the first communication identity and the priority of the second communication identity includes the following operation.

In response to the priority of the first communication identity being higher than the priority of the second communication identity, it is determined that the first communication identity has a second communication capability and the second communication identity has a fifth communication capability. The fifth communication capability is determined based on the second communication capability and a maximum communication capability supported by the terminal device.

Alternatively, in response to the priority of the second communication identity being higher than the priority of the first communication identity, it is determined that the second communication identity has a fourth communication capability and the first communication identity has have a sixth communication capability. The sixth communication capability is determined based on the fourth communication capability and a maximum communication capability supported by the terminal device.

In some optional embodiments, the priority of the first communication identity is higher than the priority of the second communication identity when the first communication identity is a primary card of the terminal device and the second communication identity is a secondary card of the terminal device.

Alternatively, the priority of the second communication identity is higher than the priority of the first communication identity when the second communication identity is a primary card of the terminal device and the first communication identity is a secondary card of the terminal device.

In some optional embodiments, the operation that the communication capability of the first communication identity and the communication capability of the second communication identity are determined based on the service type corresponding to the first communication identity and the service type corresponding to the second communication identity includes the following operation.

In response to a priority of the service type corresponding to the first communication identity being higher than a priority of the service type corresponding to the second communication identity, it is determined that the first communication identity has a second communication capability and the second communication identity has a fifth communication capability. The fifth communication capability is determined based on the second communication capability and a maximum communication capability supported by the terminal device.

Alternatively, in response to a priority of the service type corresponding to the second communication identity being higher than a priority of the service type corresponding to the first communication identity, it is determined that the second communication identity has a fourth communication capability and the first communication identity has a sixth communication capability. The sixth communication capability is determined based on the fourth communication capability and a maximum communication capability supported by the terminal device.

In some optional embodiments, in response to the service type corresponding to the first communication identity being the same as the service type corresponding to the second communication identity, the communication capability of the first communication identity and the communication capability of the second communication identity are determined based on the priority of the first communication identity and the priority of the second communication identity.

Alternatively, in response to the service type corresponding to the first communication identity being different from the service type corresponding to the second communication identity, the communication capability of the first communication identity and the communication capability of the second communication identity are determined based on the service type corresponding to the first communication identity and the service type corresponding to the second communication identity.

In some optional embodiments, the communication capability of the first communication identity is a number of MIMO layers supported by the first communication identity.

In some optional embodiments, the communication capability of the second communication identity is a number of MIMO layers supported by the second communication identity.

In some optional embodiments, a total of the communication capability of the first communication identity and the communication capability of the second communication identity is less than or equal to a maximum communication capability supported by the terminal device, and the maximum communication capability supported by the terminal device is a maximum number of MIMO layers supported by the terminal device.

It should be understood by those skilled in the art that for the related description of the apparatus for coordinating capability of the terminal device in the embodiments of the disclosure may refer to the related description of the method for coordinating capability of a terminal device in the embodiments of the disclosure.

FIG. 11 is a second diagram of a structural composition of apparatus for coordinating capability of a terminal device according to an embodiment of the disclosure. The apparatus is applied to a first network. As illustrated in FIG. 11, the apparatus for coordinating capability of a terminal device includes a determination unit 1101.

The determination unit is configured to determine a communication state of a first communication identity and a communication state of a second communication identity. The first communication identity is a communication identity, of the terminal device, corresponding to the first network, and the second communication identity is a communication identity, of the terminal device, corresponding to a second network; and the determination unit is further configured to determine a communication capability of the first communication identity based on the communication state of the first communication identity and the communication state of the second communication identity.

In some optional embodiments, the determination unit 1101 is configured to perform the following operation.

In response to both the communication state of the first communication identity and the communication state of the second communication identity being connected states, the determination unit is configured to determine that the first communication identity has a first communication capability.

Alternatively, in response to the communication state of the first communication identity being a connected state and the communication state of the second communication identity being a non-connected state, the determination unit is configured to determine that the first communication identity has a second communication capability.

In some optional embodiments, the apparatus further includes a receiving unit 1102.

The receiving unit is configured to receive the first communication capability and the second communication capability of the first communication identity reported by the terminal device.

In some optional embodiments, the determination unit 1101 is configured to perform the following operation.

In response to the communication state of the second communication identity being a connected state and a number of multiple-input multiple-output (MIMO) layers occupied by the second communication identity being m, the determination unit is configured to determine that a number of MIMO layers supported by the first communication identity is L-m. L is a maximum number of MIMO layers supported by the terminal device, and m is a positive integer greater than or equal to 1 and less than or equal to L.

Alternatively, in response to the communication state of the second communication identity being a non-connected state, the determination unit is configured to determine that a number of MIMO layers supported by the first communication identity is S. S is a number of MIMO layers supported by the first communication identity when the first communication identity works alone, S is a positive integer greater than or equal to 1 and less than or equal to L, and L is a maximum number of MIMO layers supported by the terminal device.

In some optional embodiments, the apparatus further includes a receiving unit 1102.

The receiving unit is configured to receive the maximum number of MIMO layers supported by the terminal device and the number of MIMO layers supported by the first communication identity when the first communication identity works alone that are reported by the terminal device.

In some optional embodiments, a priority of the first communication identity is the same as a priority of the second communication identity.

Alternatively, a priority of the first communication identity is lower than a priority of the second communication identity.

In some optional embodiments, the determination unit 1101 is configured to: in response to the communication state of the first communication identity being a connected state, determine that the first communication identity has a second communication capability.

In some optional embodiments, the determination unit 1101 is configured to perform the following operation.

In response to both the communication state of the first communication identity and the communication state of the second communication identity being connected states, the determination unit is configured to determine that the first communication identity has a second communication capability.

Alternatively, in response to the communication state of the first communication identity being a connected state and the communication state of the second communication identity being a non-connected state, the determination unit is configured to determine that the first communication identity has a second communication capability.

In some optional embodiments, the apparatus further includes a receiving unit 1102.

The receiving unit is configured to receive the second communication capability of the first communication identity reported by the terminal device.

In some optional embodiments, a priority of the first communication identity is higher than a priority of the second communication identity.

In some optional embodiments, the apparatus further includes a receiving unit 1102.

The receiving unit is configured to receive first indication information from the second network.

The determination unit 1101 is configured to determine the communication state of the second communication identity based on the first indication information, and the first indication information indicates at least one of: whether the second communication identity is in a connected state or a non-connected state; or a number of MIMO layers occupied by the second communication identity.

In some optional embodiments, the apparatus further includes a receiving unit 1102.

The determination unit 1101 is configured to, in response to the receiving unit receives first indication information from the second network, determine, based on the first indication information, at least one of the communication state of the second communication identity being the connected state or the number of MIMO layers occupied by the second communication identity.

Alternatively, the determination unit 1101 is configured to, in response to the receiving unit receiving no first indication information from the second network, determine that the communication state of the second communication identity is a non-connected state.

The first indication information indicates at least one of the second communication identity being in a connected state or the number of MIMO layers occupied by the second communication identity.

In some optional embodiments, the apparatus further includes a sending unit.

The sending unit (not shown in the figure) is configured to send second indication information to the second network. The second indication information indicates the communication state of the first communication identity; and the second indication information is for the second network to determine the communication capability of the second communication identity based on the communication state of the first communication identity and the communication state of the second communication identity.

In some optional embodiments, the communication capability of the second communication identity is a number of MIMO layers supported by the second communication identity.

In some optional embodiments, the communication capability of the first communication identity is a number of MIMO layers supported by the first communication identity.

It should be understood by those skilled in the art that the related description of the apparatus for coordinating capability of a terminal device in the embodiments of the disclosure may refer to the related description of the method for coordinating capability of a terminal device in the embodiments of the disclosure.

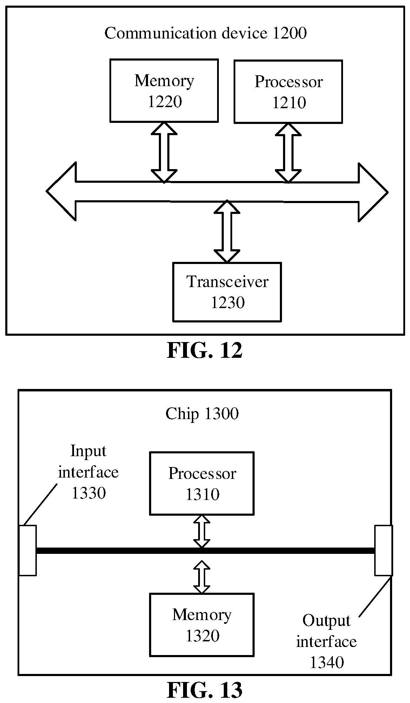

FIG. 12 is a schematic structural diagram of a communication device 1200 according to an embodiment of the disclosure. The communication device may be a terminal device or a network device (for example, a base station corresponding to a first network). The communication device 1200 illustrated in FIG. 12 includes a processor 1210. The processor 1210 may call and run a computer program stored in a memory to perform the method in the embodiments of the disclosure.

Alternatively, as illustrated in FIG. 12, the communication device 1200 may further include a memory 1220. The processor 1210 may call and run a computer program stored in the memory 1220 to perform the method in the embodiments of the disclosure.

The memory 1220 may be a component independent from the processor 1210 or may be integrated in the processor 1210.

Alternatively, as illustrated in FIG. 12, the communication device 1200 may further include a transceiver 1230. The processor 1210 may control the transceiver 1230 to communicate with other devices, specifically, to send information or data to other devices or receive information or data from other devices.

The transceiver 1230 may include a transmitter and a receiver. The transceiver 1230 may further include one or more antennas.

Alternatively, the communication device 1200 may specifically be the network device in the embodiments of the disclosure. The communication device 1200 may perform corresponding processes performed by the network device in various methods in the embodiments of the disclosure. For brevity, details will not be elaborated herein again.

Alternatively, the communication device 1200 may specifically be the mobile terminal/terminal device in the embodiments of the disclosure. The communication device 1200 may perform corresponding processes performed by the mobile terminal/terminal device in various methods in the embodiments of the disclosure. For brevity, details will not be elaborated herein again.

FIG. 13 is a schematic structural diagram of a chip according to an embodiment of the disclosure. A chip 1300 illustrated in FIG. 13 includes a processor 1310. The processor 1310 may call and run a computer program stored in a memory to perform the methods in the embodiments of the disclosure.

Alternatively, as illustrated in FIG. 13, the chip 1300 may further include a memory 1320. The processor 1310 may call and run a computer program stored in the memory 1320 to perform the methods in the embodiments of the disclosure.

The memory 1320 may be a component independent from the processor 1310 or may be integrated in the processor 1310.

Alternatively, the chip 1300 may further include an input interface 1330. The processor 1310 may control the input interface 1330 to communicate with other devices or chips, specifically, to obtain information or data from other devices or chips.

Alternatively, the chip 1300 may further include an output interface 1340. The processor 1310 may control the output interface 1340 to communicate with other devices or chips, specifically, to output information or data to other devices or chips.

Alternatively, the chip may be applied to the network device in the embodiments of the disclosure. The chip may perform corresponding processes performed by the network device in various methods in the embodiments of the disclosure. For brevity, details will not be elaborated herein again.

Alternatively, the chip may be applied to the mobile terminal/terminal device in the embodiments of the disclosure. The chip may perform corresponding processes performed by the mobile terminal/terminal device in each method in the embodiments of the disclosure. For brevity, details will not be elaborated herein again.

It should be understood that the chip in this embodiment of the disclosure may also be referred to as a system-level chip, a system chip, a chip system, a system on a chip, or the like.

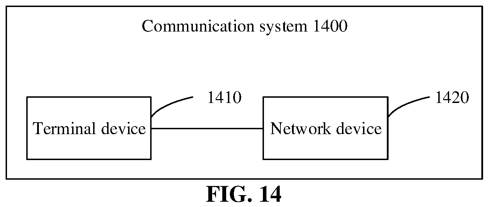

FIG. 14 is a schematic block diagram of a communication system 1400 according to an embodiment of the disclosure. As illustrated in FIG. 14, the communication system 1400 includes a terminal device 1410 and a network device 1420.

The terminal device 1410 may be configured to perform corresponding functions performed by the terminal device in the foregoing methods. The network device 1420 may be configured to perform corresponding functions performed by the network device in the foregoing methods. For brevity, details will not be elaborated herein again.

It should be understood that the processor in the embodiments of the disclosure may be an integrated circuit chip capable of signal processing. During the implementation, various operations in the foregoing method embodiments may be performed by an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or execute the methods, operations, and logical block diagrams disclosed in the embodiments of the disclosure. The general-purpose processor may be a microprocessor, or the processor may be any conventional processor or the like. The operations of the methods disclosed with reference to the embodiments of the disclosure may be directly performed by a hardware decoding processor, or performed by a combination of hardware and software modules in the decoding processor. The software module may be located in a mature storage medium in the art, such as a random access memory (RAM), a flash memory, a read-only memory (ROM), a programmable read-only memory (PROM), an electrically erasable programmable memory, or a register. The storage medium is located in a memory. The processor reads information in the memory, and implements the operations of the foregoing methods in combination with hardware in the processor.

It can be understood that the memory in the embodiments of the disclosure may be a volatile memory or a non-volatile memory, or may include both the volatile memory and the non-volatile memory. The non-volatile memory may be an ROM, a PROM, an erasable PROM (EPROM), an electrically EPROM (EEPROM), or a flash memory. The volatile memory may be a RAM, which is used as an external cache. Through illustrative rather than restrictive description, RAMs in many forms can be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DRRAM). It should be noted that the memory involved in the systems and methods described in this specification is intended to include, but is not limited to, these memories and memory of any other suitable type.

It should be understood that the foregoing description of the memory is exemplary but not limiting. For example, the memory in the embodiments of the disclosure may alternatively be an SRAM, a DRAM, an SDRAM, a DDR SDRAM, an ESDRAM, an SLDRAM, or a DRRAM. In other words, the memory in the embodiments of the disclosure is intended to include, but not be limited to, these and any other suitable type of memories.

The embodiments of the disclosure further provide a computer-readable storage medium configured to store a computer program.

Alternatively, the computer-readable storage medium may be applied to the network device in the embodiments of the disclosure. The computer program enables a computer to perform corresponding processes performed by the network device in various methods in the embodiments of the disclosure. For brevity, details will not be elaborated herein again.

Alternatively, the computer-readable storage medium may be applied to the mobile terminal/terminal device in the embodiments of the disclosure. The computer program enables a computer to perform a corresponding process implemented by the mobile terminal/terminal device in various methods in the embodiments of the disclosure. For brevity, details will not be elaborated herein again.

The embodiments of the disclosure further provide a computer program product, including a computer program instruction.

Alternatively, the computer program product may be applied to the network device in the embodiments of the disclosure. The computer program instruction enables a computer to perform corresponding processes performed by the network device in various methods in the embodiments of the disclosure. For brevity, details will not be elaborated herein again.

Alternatively, the computer program product may be applied to the mobile terminal/terminal device in the embodiments of the disclosure. The computer program instruction enables a computer to perform a corresponding process performed by the mobile terminal/terminal device in various methods in the embodiments of the disclosure. For brevity, details will not be elaborated herein again.

The embodiments of the disclosure further provide a computer program.

Alternatively, the computer program may be applied to the network device in the embodiments of the disclosure. When the computer program is run on a computer, the computer is caused to perform corresponding processes performed by the network device in various methods in the embodiments of the disclosure. For brevity, details will not be elaborated herein again.

Alternatively, the computer program may be applied to the mobile terminal/terminal device in the embodiments of the disclosure. When the computer program is run on a computer, the computer is caused to perform corresponding processes performed by the mobile terminal/terminal device in various methods in the embodiments of the disclosure. For brevity, details will not be elaborated herein again.

A person of ordinary skill in the art may understand that, units and algorithm steps in the examples described in the embodiments disclosed in this specification may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the disclosure.

A person skilled in the art may clearly understand that for convenience and brevity of description, specific working processes of the foregoing system, apparatus, and units may refer to corresponding processes in the foregoing method embodiments. Details will not be elaborated herein again.

In several embodiments provided in the disclosure, it should be understood that the disclosed system, apparatus, and method may be implemented in other manners. For example, the described apparatus embodiments are merely examples. For example, division of the units is merely logical function division and may be other division manners in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electrical, mechanical, or other forms.

The units described as separate parts may be or may not be physically separated, and parts displayed as units may be or may not be physical units, they may be located in one position, or may be distributed on a plurality of network units. Some or all of the units may be selected based on actual requirements to achieve the objective of the solution in the embodiments.

In addition, functional units in the embodiments of the disclosure may be integrated into one processing unit, or each of the units may exist alone physically, or two or more units are integrated into one unit.

If implemented in a form of a software functional unit and sold or used as a standalone product, functions may be stored in a computer-readable storage medium. In view of such an understanding, the technical solutions in the disclosure essentially, or the part contributing to the prior art, or some of the technical solutions may be implemented in a form of a software product. The computer software product is stored in a storage medium, and includes instructions for instructing a computer device (which may be a personal computer, a server, a network device, or the like) to perform all or some of the operations of the methods described in the embodiments of the disclosure. The storage medium includes any medium capable of storing program code, such as a USB flash disk, a mobile hard disk, a ROM, a RAM, a magnetic disk, or an optical disk.

The foregoing descriptions are merely specific implementations of the disclosure, but are not intended to limit the protection scope of the disclosure. Any variation or replacement readily figured out by a person skilled in the art within the technical scope disclosed in the disclosure shall fall within the protection scope of the disclosure. Therefore, the protection scope of the disclosure should be subject to the protection scope of the claims.

## Claims

1. A method for coordinating capability of a terminal device, comprising at least one of:
sending, by the terminal device, first communication capability information corresponding to a first communication identity to a first network; or
sending, by the terminal device, second communication capability information corresponding to a second communication identity to a second network, wherein
the first communication capability information is for determining a communication capability of the first communication identity, and the communication capability of the first communication identity is determined based on a communication state of the first communication identity and a communication state of the second communication identity; and the second communication capability information is for determining a communication capability of the second communication identity, and the communication capability of the second communication identity is determined based on the communication state of the first communication identity and the communication state of the second communication identity.

2. The method of claim 1, wherein
the first communication capability information indicates that the first communication identity has a first communication capability when both the communication state of the first communication identity and the communication state of the second communication identity are connected states; or
the first communication capability information indicates that the first communication identity has a second communication capability when the communication state of the first communication identity is a connected state and the communication state of the second communication identity is a non-connected state.

3. The method of claim 2, further comprising:
reporting, by the terminal device, the first communication capability and the second communication capability of the first communication identity to the first network.

4. The method of any one of claims 1 to 3, wherein
the second communication capability information indicates that the second communication identity has a third communication capability when the communication state of the second communication identity is a connected state.

5. The method of any one of claims 1 to 3, wherein
the second communication capability information indicates that the second communication identity has a fourth communication capability when both the communication state of the first communication identity and the communication state of the second communication identity are connected states; or
the second communication capability information indicates that the second communication identity has a third communication capability when the communication state of the second communication identity is a connected state and the communication state of the first communication identity is a non-connected state.

6. The method of claim 5, further comprising:
reporting, by the terminal device, the third communication capability and the fourth communication capability of the second communication identity to the second network.

7. The method of claim 1, further comprising:
in response to the communication state of the first communication identity being different from the communication state of the second communication identity, determining the communication capability of the first communication identity and the communication capability of the second communication identity based on the communication state of the first communication identity and the communication state of the second communication identity.

8. The method of claim 7, wherein in response to the communication state of the first communication identity being different from the communication state of the second communication identity, determining the communication capability of the first communication identity and the communication capability of the second communication identity based on the communication state of the first communication identity and the communication state of the second communication identity comprises:
in response to the communication state of the first communication identity being a connected state and the communication state of the second communication identity being a non-connected state, determining that the first communication identity has a second communication capability and the second communication identity has a fifth communication capability, wherein the fifth communication capability is determined based on the second communication capability and a maximum communication capability supported by the terminal device; or
in response to the communication state of the second communication identity being a connected state and the communication state of the first communication identity being a non-connected state, determining that the second communication identity has a fourth communication capability and the first communication identity has a sixth communication capability, wherein the sixth communication capability is determined based on the fourth communication capability and a maximum communication capability supported by the terminal device.

9. The method of claim 1, further comprising:
in response to the communication state of the first communication identity being the same as the communication state of the second communication identity, determining the communication capability of the first communication identity and the communication capability of the second communication identity based on at least one of:
a service type corresponding to the first communication identity;
a service type corresponding to the second communication identity;
a priority of the first communication identity; or
a priority of the second communication identity.

10. The method of claim 9, wherein determining the communication capability of the first communication identity and the communication capability of the second communication identity based on the priority of the first communication identity and the priority of the second communication identity comprises:
in response to the priority of the first communication identity being higher than the priority of the second communication identity, determining that the first communication identity has a second communication capability and the second communication identity has a fifth communication capability, wherein the fifth communication capability is determined based on the second communication capability and a maximum communication capability supported by the terminal device; or
in response to the priority of the second communication identity being higher than the priority of the first communication identity, determining that the second communication identity has a fourth communication capability and the first communication identity has a sixth communication capability, wherein the sixth communication capability is determined based on the fourth communication capability and a maximum communication capability supported by the terminal device.

11. The method of claim 10, wherein
the priority of the first communication identity is higher than the priority of the second communication identity when the first communication identity is a primary card of the terminal device and the second communication identity is a secondary card of the terminal device; or
the priority of the second communication identity is higher than the priority of the first communication identity when the second communication identity is a primary card of the terminal device and the first communication identity is a secondary card of the terminal device.

12. The method of claim 9, wherein determining the communication capability of the first communication identity and the communication capability of the second communication identity based on the service type corresponding to the first communication identity and the service type corresponding to the second communication identity comprises:
in response to a priority of the service type corresponding to the first communication identity being higher than a priority of the service type corresponding to the second communication identity, determining that the first communication identity has a second communication capability and the second communication identity has a fifth communication capability, wherein the fifth communication capability is determined based on the second communication capability and a maximum communication capability supported by the terminal device; or
in response to a priority of the service type corresponding to the second communication identity being higher than a priority of the service type corresponding to the first communication identity, determining that the second communication identity has a fourth communication capability and the first communication identity has a sixth communication capability, wherein the sixth communication capability is determined based on the fourth communication capability and a maximum communication capability supported by the terminal device.

13. The method of any one of claims 9 to 12, further comprising:
in response to the service type corresponding to the first communication identity being the same as the service type corresponding to the second communication identity, determining the communication capability of the first communication identity and the communication capability of the second communication identity based on the priority of the first communication identity and the priority of the second communication identity; or
in response to the service type corresponding to the first communication identity being different from the service type corresponding to the second communication identity, determining the communication capability of the first communication identity and the communication capability of the second communication identity based on the service type corresponding to the first communication identity and the service type corresponding to the second communication identity.

14. The method of any one of claims 1 to 13, wherein the communication capability of the first communication identity is a number of multiple-input multiple-output (MIMO) layers supported by the first communication identity.

15. The method of any one of claims 1 to 14, wherein the communication capability of the second communication identity is a number of MIMO layers supported by the second communication identity.

16. The method of any one of claims 1 to 15, wherein a total of the communication capability of the first communication identity and the communication capability of the second communication identity is less than or equal to a maximum communication capability supported by the terminal device, and the maximum communication capability supported by the terminal device is a maximum number of MIMO layers supported by the terminal device.

17. A method for coordinating capability of a terminal device, comprising:
determining, by a first network, a communication state of a first communication identity and a communication state of a second communication identity, wherein the first communication identity is a communication identity, of the terminal device, corresponding to the first network, and the second communication identity is a communication identity, of the terminal device, corresponding to a second network; and
determining, by the first network, a communication capability of the first communication identity based on the communication state of the first communication identity and the communication state of the second communication identity.

18. The method of claim 17, wherein determining, by the first network, the communication capability of the first communication identity based on the communication state of the first communication identity and the communication state of the second communication identity comprises:
in response to both the communication state of the first communication identity and the communication state of the second communication identity being connected states, determining, by the first network, that the first communication identity has a first communication capability; or
in response to the communication state of the first communication identity being a connected state and the communication state of the second communication identity being a non-connected state, determining, by the first network, that the first communication identity has a second communication capability.

19. The method of claim 18, further comprising:
receiving, by the first network, the first communication capability and the second communication capability of the first communication identity reported by the terminal device.

20. The method of claim 17, wherein determining, by the first network, the communication capability of the first communication identity based on the communication state of the first communication identity and the communication state of the second communication identity comprises:
in response to the communication state of the second communication identity being a connected state and a number of multiple-input multiple-output (MIMO) layers occupied by the second communication identity being m, determining, by the first network, that a number of MIMO layers supported by the first communication identity is L-m, wherein L is a maximum number of MIMO layers supported by the terminal device, and m is a positive integer greater than or equal to 1 and less than or equal to L; or
in response to the communication state of the second communication identity being a non-connected state, determining, by the first network, that a number of MIMO layers supported by the first communication identity is S, wherein S is a number of MIMO layers supported by the first communication identity when the first communication identity works alone, S is a positive integer greater than or equal to 1 and less than or equal to L, and L is a maximum number of MIMO layers supported by the terminal device.

21. The method of claim 20, further comprising:
receiving, by the first network, the maximum number of MIMO layers supported by the terminal device and the number of MIMO layers supported by the first communication identity when the first communication identity works alone that are reported by the terminal device.

22. The method of any one of claims 18 to 21, wherein
a priority of the first communication identity is the same as a priority of the second communication identity; or
a priority of the first communication identity is lower than a priority of the second communication identity.

23. The method of claim 17, wherein determining, by the first network, the communication capability of the first communication identity based on the communication state of the first communication identity and the communication state of the second communication identity comprises:
in response to the communication state of the first communication identity being a connected state, determining, by the first network, that the first communication identity has a second communication capability.

24. The method of claim 23, further comprising:
receiving, by the first network, the second communication capability of the first communication identity reported by the terminal device.

25. The method of claim 23 or 24, wherein
a priority of the first communication identity is higher than a priority of the second communication identity.

26. The method of any one of claims 17 to 25, wherein determining, by the first network, the communication state of the second communication identity comprises:
receiving, by the first network, first indication information from the second network, and determining the communication state of the second communication identity based on the first indication information, wherein the first indication information indicates at least one of:
whether the second communication identity is in a connected state or a non-connected state; or
a number of MIMO layers occupied by the second communication identity.

27. The method of any one of claims 17 to 25, wherein determining, by the first network, the communication state of the second communication identity comprises:
in response to the first network receiving first indication information from the second network, determining, based on the first indication information, at least one of the communication state of the second communication identity being a connected state or the number of MIMO layers occupied by the second communication identity; or
in response to the first network receiving no first indication information from the second network, determining that the communication state of the second communication identity is a non-connected state; wherein
the first indication information indicates at least one of the second communication identity being in a connected state or the number of MIMO layers occupied by the second communication identity.

28. The method of any one of claims 17 to 27, further comprising:
sending, by the first network, second indication information to the second network, wherein the second indication information indicates the communication state of the first communication identity; and the second indication information is for the second network to determine the communication capability of the second communication identity based on the communication state of the first communication identity and the communication state of the second communication identity.

29. The method of claim 28, wherein the communication capability of the second communication identity is a number of MIMO layers supported by the second communication identity.

30. The method of any one of claims 1 to 29, wherein the communication capability of the first communication identity is a number of MIMO layers supported by the first communication identity.

31. Apparatus for coordinating capability of a terminal device, applied to the terminal device and comprising:
a sending unit, configured to perform at least one of: sending first communication capability information corresponding to a first communication identity to a first network; or sending second communication capability information corresponding to a second communication identity to a second network; wherein
the first communication capability information is for determining a communication capability of the first communication identity, and the communication capability of the first communication identity is determined based on a communication state of the first communication identity and a communication state of the second communication identity; and the second communication capability information is for determining a communication capability of the second communication identity, and the communication capability of the second communication identity is determined based on the communication state of the first communication identity and the communication state of the second communication identity.

32. The apparatus of claim 31, wherein
the first communication capability information indicates that the first communication identity has a first communication capability when both the communication state of the first communication identity and the communication state of the second communication identity are connected states; or
the first communication capability information indicates that the first communication identity has a second communication capability when the communication state of the first communication identity is a connected state and the communication state of the second communication identity is a non-connected state.

33. The apparatus of claim 32, wherein the sending unit is further configured to report the first communication capability and the second communication capability of the first communication identity to the first network.

34. The apparatus of any one of claims 31 to 33, wherein
the second communication capability information indicates that the second communication identity has a third communication capability when the communication state of the second communication identity is a connected state.

35. The apparatus of any one of claims 31 to 33, wherein
the second communication capability information indicates that the second communication identity has a fourth communication capability when both the communication state of the first communication identity and the communication state of the second communication identity are connected states; or
the second communication capability information indicates that the second communication identity has a third communication capability when the communication state of the second communication identity is a connected state and the communication state of the first communication identity is a non-connected state.

36. The apparatus of claim 35, wherein the sending unit is further configured to report the third communication capability and the fourth communication capability of the second communication identity to the second network.

37. The apparatus of claim 31, wherein
in response to the communication state of the first communication identity being different from the communication state of the second communication identity, the communication capability of the first communication identity and the communication capability of the second communication identity are determined based on the communication state of the first communication identity and the communication state of the second communication identity.

38. The apparatus of claim 37, wherein the operation that, in response to the communication state of the first communication identity being different from the communication state of the second communication identity, the communication capability of the first communication identity and the communication capability of the second communication identity are determined based on the communication state of the first communication identity and the communication state of the second communication identity, comprises that:
in response to the communication state of the first communication identity being a connected state and the communication state of the second communication identity being a non-connected state, it is determined that the first communication identity has a second communication capability and the second communication identity has a fifth communication capability, wherein the fifth communication capability is determined based on the second communication capability and a maximum communication capability supported by the terminal device; or
in response to the communication state of the second communication identity being a connected state and the communication state of the first communication identity being a non-connected state, it is determined that the second communication identity has a fourth communication capability and the first communication identity has a sixth communication capability, wherein the sixth communication capability is determined based on the fourth communication capability and a maximum communication capability supported by the terminal device.

39. The apparatus of claim 31, wherein in response to the communication state of the first communication identity being the same as the communication state of the second communication identity, the communication capability of the first communication identity and the communication capability of the second communication identity are determined based on at least one of:
a service type corresponding to the first communication identity;
a service type corresponding to the second communication identity;
a priority of the first communication identity; or
a priority of the second communication identity.

40. The apparatus of claim 39, wherein the operation that the communication capability of the first communication identity and the communication capability of the second communication identity are determined based on the priority of the first communication identity and the priority of the second communication identity comprises that:
in response to the priority of the first communication identity being higher than the priority of the second communication identity, it is determined that the first communication identity has a second communication capability and the second communication identity has a fifth communication capability, wherein the fifth communication capability is determined based on the second communication capability and a maximum communication capability supported by the terminal device; or
in response to the priority of the second communication identity being higher than the priority of the first communication identity, it is determined that the second communication identity has a fourth communication capability and the first communication identity has a sixth communication capability, wherein the sixth communication capability is determined based on the fourth communication capability and a maximum communication capability supported by the terminal device.

41. The apparatus of claim 40, wherein
the priority of the first communication identity is higher than the priority of the second communication identity when the first communication identity is a primary card of the terminal device and the second communication identity is a secondary card of the terminal device; or
the priority of the second communication identity is higher than the priority of the first communication identity when the second communication identity is a primary card of the terminal device and the first communication identity is a secondary card of the terminal device.

42. The apparatus of claim 39, wherein the operation that the communication capability of the first communication identity and the communication capability of the second communication identity are determined based on the service type corresponding to the first communication identity and the service type corresponding to the second communication identity comprises that:
in response to a priority of the service type corresponding to the first communication identity being higher than a priority of the service type corresponding to the second communication identity, it is determined that the first communication identity has a second communication capability and the second communication identity has a fifth communication capability, wherein the fifth communication capability is determined based on the second communication capability and a maximum communication capability supported by the terminal device; or
in response to a priority of the service type corresponding to the second communication identity being higher than a priority of the service type corresponding to the first communication identity, it is determined that the second communication identity has a fourth communication capability and the first communication identity has a sixth communication capability, wherein the sixth communication capability is determined based on the fourth communication capability and a maximum communication capability supported by the terminal device.

43. The apparatus of any one of claims 39 to 42, wherein
in response to the service type corresponding to the first communication identity being the same as the service type corresponding to the second communication identity, the communication capability of the first communication identity and the communication capability of the second communication identity are determined based on the priority of the first communication identity and the priority of the second communication identity; or
in response to the service type corresponding to the first communication identity being different from the service type corresponding to the second communication identity, the communication capability of the first communication identity and the communication capability of the second communication identity are determined based on the service type corresponding to the first communication identity and the service type corresponding to the second communication identity.

44. The apparatus of any one of claims 31 to 43, wherein the communication capability of the first communication identity is a number of multiple-input multiple-output (MIMO) layers supported by the first communication identity.

45. The apparatus of any one of claims 31 to 44, wherein the communication capability of the second communication identity is a number of MIMO layers supported by the second communication identity.

46. The apparatus of any one of claims 31 to 45, wherein a total of the communication capability of the first communication identity and the communication capability of the second communication identity is less than or equal to a maximum communication capability supported by the terminal device, and the maximum communication capability supported by the terminal device is a maximum number of MIMO layers supported by the terminal device.

47. Apparatus for coordinating capability of a terminal device, applied to a first network and comprising:
a determination unit, configured to determine a communication state of a first communication identity and a communication state of a second communication identity, wherein the first communication identity is a communication identity, of the terminal device, corresponding to the first network, and the second communication identity is a communication identity, of the terminal device, corresponding to a second network; and determine a communication capability of the first communication identity based on the communication state of the first communication identity and the communication state of the second communication identity.

48. The apparatus of claim 47, wherein the determination unit is configured to:
in response to both the communication state of the first communication identity and the communication state of the second communication identity being connected states, determine that the first communication identity has a first communication capability; or
in response to the communication state of the first communication identity being a connected state and the communication state of the second communication identity being a non-connected state, determine that the first communication identity has a second communication capability.

49. The apparatus of claim 48, further comprising:
a receiving unit, configured to receive the first communication capability and the second communication capability of the first communication identity reported by the terminal device.

50. The apparatus of claim 47, wherein the determination unit is configured to:
in response to the communication state of the second communication identity being a connected state and a number of multiple-input multiple-output (MIMO) layers occupied by the second communication identity being m, determine that a number of MIMO layers supported by the first communication identity is L-m, wherein L is a maximum number of MIMO layers supported by the terminal device, and m is a positive integer greater than or equal to 1 and less than or equal to L; or
in response to the communication state of the second communication identity being a non-connected state, determine that a number of MIMO layers supported by the first communication identity is S, wherein S is a number of MIMO layers supported by the first communication identity when the first communication identity works alone, S is a positive integer greater than or equal to 1 and less than or equal to L, and L is a maximum number of MIMO layers supported by the terminal device.

51. The apparatus of claim 50, further comprising:
a receiving unit, configured to receive the maximum number of MIMO layers supported by the terminal device and the number of MIMO layers supported by the first communication identity when the first communication identity works alone that are reported by the terminal device.

52. The apparatus of any one of claims 48 to 51, wherein
a priority of the first communication identity is the same as a priority of the second communication identity; or
a priority of the first communication identity is lower than a priority of the second communication identity.

53. The apparatus of claim 47, wherein the determination unit is configured to:
in response to the communication state of the first communication identity being a connected state, determine that the first communication identity has a second communication capability.

54. The apparatus of claim 53, further comprising:
a receiving unit, configured to receive the second communication capability of the first communication identity reported by the terminal device.

55. The apparatus of claim 53 or 54, wherein
a priority of the first communication identity is higher than a priority of the second communication identity.

56. The apparatus of any one of claims 47 to 55, further comprising a receiving unit, wherein
the receiving unit is configured to receive first indication information from the second network; and
the determination unit is configured to determine the communication state of the second communication identity based on the first indication information, and the first indication information indicates at least one of:
whether the second communication identity is in a connected state or a non-connected state; or
a number of MIMO layers occupied by the second communication identity.

57. The apparatus of any one of claims 47 to 55, further comprising a receiving unit, wherein
the determination unit is configured to, in response to the receiving unit receiving first indication information from the second network, determine, based on the first indication information, at least one of the communication state of the second communication identity being the connected state or the number of MIMO layers occupied by the second communication identity; or
the determination unit is configured to, in response to the receiving unit receiving no first indication information from the second network, determine that the communication state of the second communication identity is a non-connected state; wherein
the first indication information indicates at least one of the second communication identity being in a connected state or the number of MIMO layers occupied by the second communication identity.

58. The apparatus of any one of claims 47 to 57, further comprising:
a sending unit, configured to send second indication information to the second network, wherein the second indication information indicates the communication state of the first communication identity; and the second indication information is for the second network to determine the communication capability of the second communication identity based on the communication state of the first communication identity and the communication state of the second communication identity.

59. The apparatus of claim 58, wherein the communication capability of the second communication identity is a number of MIMO layers supported by the second communication identity.

60. The apparatus of any one of claims 47 to 59, wherein the communication capability of the first communication identity is a number of MIMO layers supported by the first communication identity.

61. A terminal device, comprising a processor and a memory for storing a computer program, wherein the processor is configured to call and run the computer program stored in the memory to perform the method of any one of claims 1 to 16.

62. A network device, comprising a processor and a memory for storing store a computer program, wherein the processor is configured to call and run the computer program stored in the memory to perform the method of any one of claims 17 to 30.

63. A chip, comprising a processor, wherein the processor is configured to call and run a computer program from a memory, to cause a device mounted with the chip to perform the method of any one of claims 1 to 16.

64. A chip, comprising a processor, wherein the processor is configured to call and run a computer program from a memory, to cause a device mounted with the chip to perform the method of any one of claims 17 to 30.

65. A computer-readable storage medium having stored thereon a computer program that enables a computer to perform the method of any one of claims 1 to 16.

66. A computer-readable storage medium having stored thereon a computer program that enables a computer to perform the method of any one of claims 17 to 30.

67. A computer program product, comprising a computer program instruction that enables a computer to perform the method of any one of claims 1 to 16.

68. A computer program product, comprising a computer program instruction that enables a computer to perform the method of any one of claims 17 to 30.

69. A computer program, wherein the computer program enables a computer to perform the method of any one of claims 1 to 16.

70. A computer program, wherein the computer program enables a computer to perform the method of any one of claims 17 to 30.
